(19) Europäisches Patentamt
European Patent Office
Office européen des brevets

(11) EP 4 647 452 A1

(12) EUROPEAN PATENT APPLICATION
published in accordance with Art. 153(4) EPC

(43) Date of publication:
**12.11.2025 Bulletin 2025/46**

(21) Application number: **23914781.2**

(22) Date of filing: **21.12.2023**

(51) International Patent Classification (IPC):
***C08G 18/10*** (2006.01) ***C08G 18/12*** (2006.01)
***C08G 18/32*** (2006.01) ***C08G 18/40*** (2006.01)
***C08G 18/42*** (2006.01) ***C08G 18/65*** (2006.01)
***C08G 18/73*** (2006.01) ***C08G 18/75*** (2006.01)
***C08G 18/78*** (2006.01) ***C09D 175/00*** (2006.01)

(52) Cooperative Patent Classification (CPC):
**C08G 18/10; C08G 18/12; C08G 18/32; C08G 18/40; C08G 18/42; C08G 18/65; C08G 18/73; C08G 18/75; C08G 18/78; C09D 175/00**

(86) International application number:
**PCT/JP2023/045906**

(87) International publication number:
**WO 2024/147295 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.01.2023 JP 2023001163**
**06.01.2023 JP 2023001165**

(71) Applicant: **Asahi Kasei Kabushiki Kaisha**
**Tokyo 1000006 (JP)**

(72) Inventors:
- **TANAKA, Eiko**
  **Tokyo 100-0006 (JP)**
- **SAEDA, Kirara**
  **Tokyo 100-0006 (JP)**
- **TANAKA, Yoko**
  **Tokyo 100-0006 (JP)**

(74) Representative: **Strehl & Partner mbB**
**Maximilianstrasse 54**
**80538 München (DE)**

# (54) POLYISOCYANATE COMPOSITION, POLYASPARTIC COATING COMPOSITION, AND COATING FILM

(57) The present invention provides a polyisocyanate composition comprising a polyisocyanate derived from at least one diisocyanate selected from the group consisting of an aliphatic diisocyanate and an alicyclic diisocyanate, and at least one polyol selected from the group consisting of a polyester polyol and a polyoxyalkylene polyol, wherein the polyol has a number average molecular weight of 200 or more and 2,000 or less and an average number of hydroxyl groups of 2 or 3, the polyisocyanate contains both a urethane group and an allophanate group within a single molecule, and a molar ratio of allophanate groups to urethane groups is 2/98 or more and 30/70 or less.



Processed by Luminess, 75001 PARIS (FR)

## Description

### TECHNICAL FIELD

The present invention relates to a polyisocyanate composition, a polyaspartic coating composition, and a coating.

### BACKGROUND ART

Among polyurea coating compositions, aliphatic polyaspartic coating compositions are formed from an aspartic acid ester compound containing an amino group and an aliphatic and/or alicyclic polyisocyanate composition containing an isocyanate group. The disadvantages of aromatic polyurea coating compositions, such as, yellowing of the coating film due to ultraviolet exposure, have been significantly reduced, and they have been widely used in various applications, including paints, flooring materials, and waterproofing materials.

Aspartic acid ester compounds have a lower viscosity compared to the main polyol in polyurethane coating compositions, allowing for a significant reduction in the amount of diluent solvent in polyaspartic coating compositions. This enables the formulation of high-solid or solvent-free compositions. Additionally, due to the rapid reactivity of the amino groups in aspartic acid ester compounds with the isocyanate groups of aliphatic and/or alicyclic polyisocyanates, polyaspartic coating compositions exhibit a faster curing rate at room temperature compared to polyurethane coating compositions, resulting in superior mechanical strength.

For example, Patent Document 1 discloses a polyaspartic coating composition that contains a polyaspartic acid ester compound and a polyisocyanate composition in which the content (mol%) of isocyanurate groups, iminooxadiazinedione groups, uretdione groups, allophanate groups, and biuret groups has a predetermined relationship. In this polyaspartic coating composition, the polyisocyanate composition is characterized by its low viscosity, making it suitable for high-solid or solvent-free formulations, while maintaining curing and drying properties. Additionally, the coating film produced using this polyaspartic coating composition exhibits excellent chemical resistance, hardness, and weather resistance.

### Citation List

#### Patent Document

Patent Document 1: PCT International Publication No. WO 2018/163953

### SUMMARY OF INVENTION

#### Technical Problem

However, although the polyaspartic coating composition proposed in Patent Document 1 achieves high solidity, there is no mention of the suppression of crystallization of the polyisocyanate composition used as a curing agent, nor of the elongation of the coating film obtained using the polyaspartic coating composition at a low temperature of about -20°C.

The present invention has been made in consideration of the above circumstances, and aims to provide a polyisocyanate composition that has good viscosity, can suppress crystallization, and exhibits good appearance, weather resistance, and elongation at -20°C when formed into a coating film, as well as a polyaspartic paint composition and coating film using the polyisocyanate composition.

#### Solution to Problem

That is, the present invention includes the following aspect 1.

(1) A polyisocyanate composition comprising a polyisocyanate derived from

at least one diisocyanate selected from the group consisting of an aliphatic diisocyanate and an alicyclic diisocyanate, and

at least one polyol selected from the group consisting of a polyester polyol and a polyoxyalkylene polyol, wherein the polyol has a number average molecular weight of 200 or more and 2,000 or less and an average number of hydroxyl groups of 2 or 3,

the polyisocyanate contains both a urethane group and an allophanate group within a single molecule, and

a molar ratio of allophanate groups to urethane groups is 2/98 or more and 30/70 or less.

(2) The polyisocyanate composition according to (1), wherein a molar ratio of uretdione groups to a total amount of isocyanurate groups, uretdione groups, allophanate groups, and urethane groups is 0.3 mol% or more and 20 mol% or less.
(3) The polyisocyanate composition according to (1) or (2), wherein a molar ratio of isocyanurate groups to a total amount of isocyanurate groups, uretdione groups, allophanate groups, and urethane groups is 0.01 mol% or more and 20.00 mol% or less.
(4) The polyisocyanate composition according to any one of (1) to (3), wherein the polyol comprises two of the polyester polyols having structures different from each other, or comprises a polyester polyol and a polyoxyalkylene polyol.
(5) The polyisocyanate composition according to any one of (1) to (4), wherein a content of the polyoxyalkylene polyol is 30 mass% or less with respect to a total mass of the polyol.
(6) The polyisocyanate composition according to any one of (1) to (5), wherein a content of the polyol having an average number of hydroxyl groups of 3 is 30 mass% or less with respect to a total mass of the polyols.
(7) The polyisocyanate composition according to any one of (1) to (6), which is a curing agent for polyaspartic coating materials.
(8) A polyaspartic coating composition comprising the polyisocyanate composition according to any one of (1) to (7) and an aspartic acid ester compound.
(9) A coating film obtained by curing the polyaspartic coating composition according to (8).

The present invention includes the following aspect 2.

(1) A polyisocyanate composition comprising a polyisocyanate derived from a diisocyanate, a first polyol, and a second polyol, wherein

the diisocyanate is at least one selected from the group consisting of an aliphatic diisocyanate and an alicyclic diisocyanate,
the first polyol has a number average molecular weight of 200 or more and 2,000 or less, an average number of hydroxyl groups of 2 or 3, and is at least one selected from the group consisting of a polyester polyol and a polyoxyalkylene polyol,
the second polyol is a monoalcohol, diol, or triol having a branched chain and having 2 to 20 carbon atoms, and a molar ratio of allophanate groups to urethane groups is 0/100 or more and 30/70 or less.

(2) The polyisocyanate composition according to (1), wherein a content of the second polyol is 1 mass% or more and 30 mass% or less with respect to a total mass of the first polyol and the second polyol.
(3) The polyisocyanate composition according to (1) or (2), wherein the second polyol is a diol having a branched chain and having 3 to 20 carbon atoms.
(4) The polyisocyanate composition according to any one of (1) to (3), wherein a molar ratio of allophanate groups to urethane groups is 2/98 to 30/70.
(5) The polyisocyanate composition according to any one of (1) to (4), wherein a molar ratio of uretdione groups to a total amount of isocyanurate groups, uretdione groups, allophanate groups, and urethane groups is 0.3 mol% or more and 20 mol% or less.
(6) The polyisocyanate composition according to any one of (1) to (5), wherein a molar ratio of isocyanurate groups to a total amount of isocyanurate groups, uretdione groups, allophanate groups, and urethane groups is 0.01 mol% or more and 20.00 mol% or less.
(7) The polyisocyanate composition according to any one of (1) to (6), wherein the first polyol comprises two of the polyester polyols having structures different from each other, or comprises the polyester polyol and the polyoxyalkylene polyol.
(8) The polyisocyanate composition according to any one of (1) to (7), wherein a content of the polyoxyalkylene polyol is 30 mass% or less with respect to a total mass of the first polyol and the second polyol.
(9) The polyisocyanate composition according to (1), wherein a content of the polyol having an average number of hydroxyl groups of 3 is 30 mass% or less with respect to a total mass of the first polyol and the second polyol.
(10) The polyisocyanate composition according to any one of (1) to (9) which is a curing agent for polyaspartic coating materials.
(11) A polyaspartic coating composition comprising the polyisocyanate composition according to any one of (1) to (10) and an aspartic acid ester compound.
(12) A coating film obtained by curing the polyaspartic coating composition according to (11).

Advantageous Effects of Invention

The polyisocyanate composition of the above aspect can provide a polyisocyanate composition that has good viscosity, can suppress crystallization, and has good appearance, weather resistance, and elongation at -20°C when formed into a coating film. The polyaspartic coating composition of the above aspect contains the polyisocyanate composition, and has good appearance, weather resistance, and elongation at -20°C when formed into a coating film. The coating film of the above aspect is formed by curing the polyaspartic coating composition, and has good appearance, weather resistance, and elongation at -20°C.

DESCRIPTION OF EMBODIMENTS

Hereinafter, an embodiment of the present invention (hereinafter, referred to as "the present embodiment") will be described in detail. Note that the present invention is not limited to the following embodiment. The present invention can be modified appropriately within the scope of the present invention.
In this specification, the term "polyol" refers to a compound having two or more hydroxyl groups (-OH).
In this specification, the term "polyisocyanate" refers to a reaction product in which a plurality of monomer compounds (monomers) having one or more isocyanate groups (-NCO) are bonded together.

<<Polyisocyanate composition of embodiment 1>>

The polyisocyanate composition of the present embodiment contains a polyisocyanate derived from at least one diisocyanate selected from the group consisting of an aliphatic diisocyanate and an alicyclic diisocyanate, and at least one polyol selected from the group consisting of a polyester polyol and a polyoxyalkylene polyol.
The polyol has a number average molecular weight of 200 or more and 2,000 or less and an average number of hydroxyl groups of 2 or 3.
The polyisocyanate contains both a urethane group and an allophanate group within a single molecule.
In the polyisocyanate composition of the present embodiment, the molar ratio of allophanate groups to urethane groups (molar ratio of allophanate group/urethane group) is 2/98 or more and 30/70 or less, preferably 3/97 or more and 30/70 or less, and more preferably 5/95 or more and 20/80 or less. When the molar ratio of allophanate group/urethane group is equal to or more than the lower limit, crystallization can be suppressed, and the polyisocyanate composition of the present embodiment can be blended as a uniform curing agent in a coating composition, particularly in a polyaspartic coating composition. This allows a coating film to be obtained that is excellent in curability, surface appearance, and elongation at a low temperature of about -20°C. On the other hand, when the molar ratio of allophanate group/urethane group is equal to or less than the upper limit, a coating film that is excellent in weather resistance can be obtained.
The molar ratio of allophanate group/urethane group can be calculated, for example, using the $^{13}$C-NMR spectroscopy method. Specifically, it can be calculated using the method described in the Examples later.
The polyisocyanate composition of the present embodiment has the above-mentioned configuration, and therefore has good viscosity, can suppress crystallization, and can provide a coating film that is good in appearance, weather resistance, and elongation at -20°C.
The polyisocyanate composition of the present embodiment can be suitably used as a curing agent for a polyaspartic coating composition containing an aspartic acid ester compound as a main component, namely, as a curing agent for polyaspartic coating materials.
Next, each of the constituent components contained in the polyisocyanate composition of the present embodiment will be described in detail below.

<Polyisocyanate>

The polyisocyanate contained in the polyisocyanate composition of the present embodiment is derived from at least one diisocyanate selected from the group consisting of an aliphatic diisocyanate and an alicyclic diisocyanate, and at least one polyol selected from the group consisting of a polyester polyol and a polyoxyalkylene polyol. That is, the polyisocyanate is a reaction product of the diisocyanate and the polyol.
In addition, the polyisocyanate contains both a urethane group and an allophanate group within a single molecule. The urethane group is formed by a reaction between an isocyanate group of the diisocyanate and a hydroxyl group of the polyol. The allophanate group is formed by a reaction between a urethane group and an isocyanate group of the diisocyanate, or by a reaction between two isocyanate groups of the diisocyanate and one hydroxyl group of the polyol.
In addition to the urethane groups and allophanate groups, the polyisocyanates may contain other functional groups such as isocyanurate groups, uretdione groups, and the like.
Alternatively, the polyisocyanate composition of the present embodiment may further contain, in addition to the

polyisocyanate having a urethane group and an allophanate group in the molecule, a polyisocyanate having any one of the functional groups of a urethane group and an allophanate group, or a polyisocyanate having other functional groups, such as an isocyanurate group or a uretdione group, either alone or in combination of two or more thereof.

In the polyisocyanate composition of the present embodiment, the molar ratio of uretdione groups to the total amount of isocyanurate groups, uretdione groups, allophanate groups, and the urethane groups is preferably 0.3 mol% or more and 20 mol% or less, more preferably 1 mol% or more and 10 mol% or less, and even more preferably 2 mol% or more and 10 mol% or less. When the molar ratio of uretdione groups is equal to or more than the lower limit, the viscosity of the polyisocyanate composition can be lowered, making it possible to obtain a high-solid coating material. On the other hand, when the molar ratio of uretdione groups is equal to or less than the upper limit, the low-temperature elongation of the coating film can be improved.

In the polyisocyanate composition of the present embodiment, the molar ratio of isocyanurate groups to the total amount of isocyanurate groups, uretdione groups, allophanate groups, and urethane groups is preferably 0.01 mol% or more and 20.00 mol% or less, more preferably 0.01 mol% or more and 10.00 mol% or less, even more preferably 0.01 mol% or more and 5.00 mol% or less, and particularly preferably 0.01 mol% or more and 3.00 mol% or less. When the molar ratio of isocyanurate groups is equal to or less than the upper limit, the low-temperature elongation of the coating film can be improved. On the other hand, a lower molar amount of isocyanurate groups can further improve the low-temperature elongation of the coating film.

The molar amounts of each functional group in the polyisocyanate composition can be measured, for example, using the $^{13}C$-NMR spectroscopy method. The molar ratios of the specific functional groups can be calculated using the calculated molar amounts of each functional group. Specifically, it can be calculated using the method described in the Examples later.

[Diisocyanate]

The diisocyanate is at least one selected from the group consisting of an aliphatic diisocyanate and an alicyclic diisocyanate.

Examples of the aliphatic diisocyanate include, but are not limited to, 1,4-diisocyanatobutane, 1,5-diisocyanatopentane (hereinafter sometimes abbreviated as "PDI"), ethyl (2,6-diisocyanato)hexanoate, 1,6-diisocyanatohexane (hereinafter sometimes abbreviated as "HDI"), 1,9-diisocyanatononane, 1,12-diisocyanatododecane, 2,2,4 or 2,4,4-trimethyl-1,6-diisocyanatohexane, and the like. These aliphatic diisocyanates may be used alone or in combination of two or more.

Examples of the alicyclic diisocyanates include, but are not limited to, 1,3 or 1,4-bis(isocyanatomethyl)cyclohexane (hereinafter sometimes abbreviated as "hydrogenated XDI"), 1,3 or 1,4-diisocyanatocyclohexane, 3,5,5-trimethyl-1-isocyanato-3-(isocyanatomethyl)cyclohexane (hereinafter sometimes abbreviated as "IPDI"), 4,4'-diisocyanato-dicyclohexylmethane (hereinafter sometimes abbreviated as "hydrogenated MDI"), 2,5 or 2,6-diisocyanatomethylnorbornane, and the like. These alicyclic diisocyanates may be used alone or in combination of two or more.

These aliphatic diisocyanates and alicyclic diisocyanates may be used alone, or in any combination of two or more.

Among these, the diisocyanate is preferably PDI, HDI, IPDI, hydrogenated XDI, or hydrogenated MDI, more preferably PDI, HDI, or IPDI, and even more preferably HDI.

In the production of polyisocyanates, in addition to the above-mentioned diisocyanates, isocyanate monomers as shown below may also be used.

(1) Aromatic diisocyanates such as diphenylmethane-4,4'-diisocyanate (MDI), 1,5-naphthalene diisocyanate, tolylene diisocyanate (TDI), xylylene diisocyanate (XDI), m-tetramethylxylylene diisocyanate (TMXDI), or the like.

(2) Triisocyanates such as 4-isocyanatomethyl-1,8-octamethylene diisocyanate (hereinafter sometimes referred to as "NTI"), 1,3,6-hexamethylene triisocyanate (hereinafter sometimes referred to as "HTI"), bis(2-isocyanatoethyl) 2-isocyanatoglutarate (hereinafter sometimes referred to as "GTI"), lysine triisocyanate (hereinafter sometimes referred to as "LTI"), or the like.

[Polyol]

The number average molecular weight of the polyol is 200 to 2,000, preferably 300 to 1,500, more preferably 350 to 1,200, and even more preferably 400 to 1,000. When the number average molecular weight of the polyol is equal to or more than the lower limit, the elongation of the coating film at a low temperature of about -20°C can be improved and results in good performance. On the other hand, when the number average molecular weight of the polyol is equal to or less than the upper limit, the viscosity of the polyisocyanate composition can be maintained at a lower level, making it possible to obtain a high-solid coating material.

The number average molecular weight Mn of the polyol is, for example, the number average molecular weight based on polystyrene standards as measured by GPC. Additionally, when two or more polyols are used in combination, the number average molecular weight of the mixture is calculated.

The viscosity at 25°C of the polyol is preferably 90 mPa·s or more and 3,000 mPa·s or less, more preferably 100 mPa·s or more and 2,500 mPa·s or less, and even more preferably 100 mPa·s or more and 2,000 mPa·s or less. When the viscosity of the polyol is equal to or more than the lower limit, the elongation of the coating film at a low temperature of about -20°C can be improved and results in good performance. On the other hand, when the viscosity of the polyol is equal to or less than the upper limit, the viscosity of the polyisocyanate composition can be maintained at a lower level, making it possible to obtain a high-solid coating material.

The viscosity at 25°C of the polyol can be measured by the method described in the Examples later.

The average number of hydroxyl groups in the polyol is 2 or 3.

By using a polyol having an average number of hydroxyl groups of 2, the viscosity of the polyisocyanate composition can be lowered, making it possible to obtain a high-solid coating material. In addition, because the polyisocyanate has fewer branches, the elongation of the coating film at a low temperature of about -20°C can be further improved and results in an improved performance.

In addition, by using a polyol having an average number of hydroxyl groups of 3, crystallization can be further suppressed, and the polyisocyanate composition of the present embodiment can be blended as a uniform curing agent in a coating composition, particularly in a polyaspartic coating composition, thereby obtaining a coating film with superior curability and surface appearance.

The polyol is at least one selected from the group consisting of a polyester polyol and a polyoxyalkylene polyol.

(Polyester polyol)

The number average molecular weight of the polyester polyol may be 200 or more and 2,000 or less, preferably 300 or more and 1,500 or less, more preferably 350 or more and 1,200 or less, and even more preferably 400 or more and 1,000 or less.

Examples of the polyester polyol include the following polyester polyols (1) and (2).

(1) Polyester polyols obtained by a condensation reaction between a dibasic acid alone or a mixture of two or more and an alcohol with two or more hydroxyl groups alone or a mixture of two or more.

(2) Polycaprolactone polyol obtained by ring-opening polymerization of ε-caprolactone with an alcohol with two or more hydroxyl groups.

Examples of the dibasic acid include carboxylic acids such as succinic acid, adipic acid, dimer acid, maleic anhydride, phthalic anhydride, isophthalic acid, terephthalic acid, 1,4-cyclohexanedicarboxylic acid, succinic anhydride, maleic acid, phthalic acid, glutaric acid, suberic acid, azelaic acid, sebacic acid, decanedioic acid, itaconic acid, itaconic anhydride, hexahydrophthalic acid, hexahydrophthalic anhydride, tetrahydrophthalic acid, tetrahydrophthalic anhydride, and the like.

Examples of the alcohol with two or more hydroxyl groups include ethylene glycol, propylene glycol, diethylene glycol, 1,4-butanediol, neopentyl glycol, 1,6-hexanediol, trimethylpentanediol, cyclohexanediol, 2-ethyl-1,3-hexanediol, trimethylolpropane, glycerin, pentaerythritol, 2-methylolpropanediol, ethoxylated trimethylolpropane, 1,3-propanediol, pentane-1,5-diol, heptane-1,7-diol, octane-1,8-diol, nonane-1,9-diol, decane-1,10-diol, dodecane-1,12-diol, cyclohexane-1,4-dimethanol, 4,4'-(1-methylethylidene)biscyclohexanol, 1,1,1-trimethylolethane hexane-1, 2,6-triol, dipropylene glycol, propane-1,2-diol, butane-1,3-diol, hexane-1,2-diol, 2-methylpentane-2,4-diol, 3-methyl-1,5-pentanediol, octane-1,2-diol, 2-butyl-2-ethylpropane-1,3-diol, decane-1,2-diol, 2-methyl-1,3-propanediol, and the like.

Among these, the polyester polyol is preferably a difunctional or a trifunctional polycaprolactone polyol.

Examples of the commercially available difunctional polycaprolactone polyols include those manufactured by Daicel Corporation under the trade names "PLACCEL 205H" (number average molecular weight: 530), "PLACCEL 210" (number average molecular weight: 1,000), "PLACCEL 210CP" (number average molecular weight: 1,000), "PLACCEL 212" (number average molecular weight: 1,250), "PLACCEL 212CP" (number average molecular weight: 1,250), "PLACCEL 220" (number average molecular weight: 2,000), "PLACCEL 220CPB" (number average molecular weight: 2,000), and "PLACCEL 220CPT" (number average molecular weight: 2,000); those manufactured by Ingevity under the trade names "Capa 2043" (number average molecular weight: 400, viscosity at 25°C: 246 mPa-s), "Capa 2054" (number average molecular weight: 550, viscosity at 25°C: 360 mPa·s), "Capa2085" (number average molecular weight: 830, viscosity at 25°C: 627 mPa·s), and "Capa2067A" (number average molecular weight: 650, viscosity at 25°C: 493 mPa-s), and the like.

In addition, examples of commercially available difunctional polyester polyols include those manufactured by Kuraray Co., Ltd. under the trade name "Kuraray Polyol P-510" (number average molecular weight: 500, viscosity at 25°C:

540 mPa·s); those manufactured by DIC Corporation under the trade name "ODX2406" (number average molecular weight: 440, viscosity at 25°C: 460 mPa-s), and the like.

Examples of the commercially available trifunctional polycaprolactone polyols include those manufactured by Daicel Corporation under the trade names "PLACCEL 305" (number average molecular weight: 550), "PLACCEL 308" (number average molecular weight: 850), "PLACCEL 309" (number average molecular weight: 900), "PLACCEL 312" (number average molecular weight: 1,250), and "PLACCEL 320" (number average molecular weight: 2,000); those manufactured by DIC Corporation under the trade name "ODX2542C" (number average molecular weight: 850); those manufactured by Ingevity under the trade names "Capa3050" (number average molecular weight: 540, viscosity at 60°C: 160 mPa·s) and "Capa23091" (number average molecular weight: 900, viscosity at 60°C: 165 mPa·s), and the like.

(Polyoxyalkylene polyol)

The polyoxyalkylene polyol is a dito tetra-valent polyol containing a repeating unit represented by $-O(CH_2)_n-$ and can be derived from a dito tetra-valent alcohol and an ethylene oxide, propylene oxide, tetrahydrofuran, or the like. In addition, although there is no particular limitation, for example, it can be obtained by cationic polymerization of an ethylene oxide, propylene oxide, tetrahydrofuran, or the like with a dito tetra-valent alcohol as an initiator in the presence of a catalyst.

The number average molecular weight of the polyoxyalkylene polyol is preferably 200 or more and 2,000 or less, more preferably 200 or more and 1,500 or less, and even more preferably 200 or more and 1,000 or less.

Examples of the initiators include dihydric alcohols: ethylene glycol, propylene glycol, diethylene glycol, 1,4-butanediol, 1,3-butylene glycol, neopentyl glycol, 1,6-hexanediol, trimethylpentanediol, cyclohexanediol, pentaerythritol, 2-methylolpropanediol, 2-ethyl-1,3-hexanediol, 1,3-propanediol, pentane-1,5-diol, heptane-1,7-diol, octane-1,8-diol, nonane-1,9-diol, decane-1,10-diol, dodecane-1,12-diol, cyclohexane-1,4-dimethanol, 4,4'-(1-methylethylidene)biscyclohexanol, 1,1,1-trimethylolethane, hexane-1,2,6-triol, dipropylene glycol, propane-1,2-diol, butane-1,3-diol, hexane-1,2-diol, 2-methylpentane-2,4-diol, 3-methyl-1,5-pentanediol, octane-1,2-diol, 2-butyl-2-ethylpropane-1,3-diol, decane-1,2-diol, 2-methyl-1,3-propanediol, or the like; trihydric alcohols: glycerin, trimethylolpropane, or the like; tetrahydric alcohols: pentaerythritol, or the like. From the viewpoint of obtaining a polyisocyanate component with a low viscosity, a branched polyhydric alcohol is preferred.

As the catalyst, a hydroxide of lithium, sodium, potassium, or the like, or a strongly basic catalyst such as an alcoholate, an alkylamine, or the like can be used.

The cationic polymerization of ethylene oxide, propylene oxide, tetrahydrofuran, or the like is preferably carried out in a nitrogen gas atmosphere. The molar ratio of ethylene oxide, propylene oxide, tetrahydrofuran, or the like and the above-mentioned initiators is preferably set in a specified proportion to achieve a desired molecular weight. Additionally, a catalyst is preferably added in an amount of 0.1 ppm to 100 ppm to ethylene oxide, propylene oxide, tetrahydrofuran, or the like, and the reaction is preferably conducted at a temperature of 150°C to 200°C for 4 hours to 10 hours.

Examples of the commercially available difunctional polyoxyalkylene polyols include those manufactured by SK Chemicals under the trade names "ECOTRION H1000" (number average molecular weight: 1,000, viscosity at 25°C: 489 mPa·s) and "ECOTRION H2000" (number average molecular weight: 2,000, viscosity at 25°C: 1,701 mPa·s); those manufactured by Allessa under the trade name "Velvet H250" (number average molecular weight: 227, viscosity at 25°C: 107 mPa·s); those manufactured by Mitsubishi Chemical under the trade name "BioPTMG650" (number average molecular weight: 655, viscosity at 25°C: 351 mPa·s), and the like.

The polyol preferably contains two types of polyester polyols having structures different from each other, or contains a polyester polyol and a polyoxyalkylene polyol. By containing the above-mentioned combination of two types of polyols, crystallization can be further suppressed.

Furthermore, when the two types of polyester polyols having different structures are used in combination, or a polyester polyol and a polyoxyalkylene polyol are used in combination, the blending ratio can be appropriately adjusted to ensure that the number average molecular weight falls within the above-specified range. For example, these polyester polyols may be blended in a mass ratio of 3:1 to 1:3, 2:1 to 1:2, or 1.5:1 to 1:1.5.

The content of the polyoxyalkylene polyol is preferably 30 mass% or less, more preferably 28 mass% or less, even more preferably 15 mass% or less, and particularly preferably 10 mass% or less, with respect to the total mass of the polyol. When the content of the polyoxyalkylene polyol is equal to or less than the upper limit, the weather resistance of the coating film can be improved. The lower limit of the content of the polyoxyalkylene polyol is not particularly limited, and can be, for example, 0 mass%, 1 mass%, 2 mass%, 3 mass%, or the like.

When a polyol having an average number of hydroxyl groups of 2 and a polyol having an average number of hydroxyl groups of 3 are used in combination, it is preferable to contain more polyol having an average number of hydroxyl groups of 2 than polyol having an average number of hydroxyl groups of 3. Specifically, the content of the polyol having an average number of hydroxyl groups of 3 is preferably 30 mass% or less, more preferably 28 mass% or less, even more preferably 15 mass% or less, and particularly preferably 10 mass% or less, with respect to the total mass of the polyols.

When the content of the polyol having an average number of hydroxyl groups of 3 is equal to or less than the upper limit, the elongation of the coating film at a low temperature of about -20°C can be improved. The lower limit of the content of the polyol having an average number of hydroxyl groups of 3 is not particularly limited, and can be, for example, 0 mass%, 1 mass%, 2 mass%, 3 mass%, or the like.

<Other components>

The polyisocyanate composition of the present embodiment preferably contains one or more selected from the group consisting of an ultraviolet absorber and a light stabilizer. By containing an ultraviolet absorber and a light stabilizer, a coating film with superior weather resistance can be obtained.
The ultraviolet absorbing agent is not particularly limited, and examples thereof include benzotriazole-based compounds, triazine-based compounds, benzophenone-based compounds, cyanoacrylate-based compounds, and the like.
The benzotriazole-based compound is not particularly limited, and examples thereof include those manufactured by BASF Japan Ltd. under the trade names Tinuvin P, PS, 99-2, 213, 234, 326, 329, 360, 384-2, 571, 900, 928, 970, and 1130; those manufactured by ADEKA CORPORATION under the trade names ADK STAB LA-24, 29, 31RG, 31G, 32, 36, 36RG, and F70; those manufactured by Taiwan Yongkou Chemical Industry Co., Ltd. under the trade names EVERSORB 70, 71, 72, 73, 74, 75, 76, 77, 78, 79, 80, 81, 82, 88, 89, 109, and 234; and the like.
The triazine-based compound is not particularly limited, and examples thereof include those manufactured by BASF Japan Ltd. under the trade names Tinuvin 400, 400-DW, 405, 460, 477, 479, 479-DW, 1577ED, and 1600; those manufactured by Taiwan Yong Guang Chemical Industry Co., Ltd. under the trade names EVERSORB 40, 41FD, and 45; and the like.
The benzophenone-based compound is not particularly limited, and examples thereof include those manufactured by BASF Japan Ltd. under the trade names Chimassorb 81, 81FL, Uvinul 3049, and 3050; those manufactured by ADEKA Corporation under the trade name ADK STAB 1413; those manufactured by Taiwan Eikoh Chemical Industry Co., Ltd. under the trade names EVERSORB 10, 11, 12, 51, and 52; and the like.
The cyanoacrylate compound is not particularly limited, and examples thereof include those manufactured by BASF Japan Ltd. under the trade names Uvinul 3030FF, 3035, and 3039; and the like.
From the viewpoint of maintaining the weather resistance of the coating film over a long period of time, benzotriazole-based compounds, triazine-based compounds, and benzophenone-based compounds are preferable, and benzotriazole-based compounds and triazine-based compounds are more preferable.
The light stabilizer is not particularly limited, and specific examples thereof include hindered amine compounds.
Examples of the hindered amine compound include, but are not limited to, those manufactured by BASF Japan Ltd. under the trade names Tinuvin 111FDL, 123, 123-DW, PA144, 152, 249, 292, 783FDL, and 765; those manufactured by ADEKA CORPORATION under the trade names ADK STAB LA-52, 57, 63P, 68, 72, 77Y, 77G, 81, and 402AF; those manufactured by Taiwan Yongkou Chemical Industry Co., Ltd. under the trade names EVERSORB 60, 61, 90, 91FD, 93, 94FD, 95, 765, and S02; and the like.
The ultraviolet absorbents and the light stabilizers may each be used alone or in combination of two or more.
The total amount of the ultraviolet absorber and the light stabilizer added is preferably 10 ppm by mass or more and 15,000 ppm by mass or less with respect to the total mass of the polyisocyanate composition.
The polyisocyanate composition of the present embodiment may further contain an antioxidant.
Examples of the antioxidant include a hindered phenol-based antioxidant, and the like.
Examples of the hindered phenol-based antioxidant include, but are not limited to, dibutylhydroxytoluene (hereinafter, may be abbreviated as "BHT"); those manufactured by BASF under the trade names "Irganox 1010", "Irganox 1135", "Irganox 1330", "Irganox 3114", "Irganox 565", and "Irganox 1520L"; those manufactured by ADEKA Corporation under the trade names "ADK STAB AO-20", "ADK STAB AO-30", "ADK STAB AO-50", "ADK STAB AO-60", and "ADK STAB AO-80"; and the like.

<Method for producing polyisocyanate composition>

The polyisocyanate composition of the present embodiment can be obtained by conducting the urethane formation reaction, which forms a urethane group, and the allophanate formation reaction, which forms an allophanate group, simultaneously in the presence of an excess diisocyanate, and then removing any unreacted diisocyanate monomers after the reaction is complete.
The urethane formation reaction can be carried out by mixing an excess of diisocyanate with a polyol, and adding a urethane formation reaction catalyst as necessary.
The urethane formation reaction catalyst is not particularly limited, and examples thereof include tin-based compounds, zinc-based compounds, amine-based compounds, and the like.

The urethane formation reaction temperature is preferably from 50°C to 160°C, and more preferably from 60°C to 120°C.

When the urethane formation reaction temperature is equal to or lower than the upper limit, there tends to be a more effective suppression of coloring in the polyisocyanate.

The urethane formation reaction time is preferably from 30 minutes to 4 hours, more preferably from 1 hour to 3 hours, and even more preferably from 1 hour to 2 hours.

The molar ratio of isocyanate groups of the isocyanate monomer to hydroxyl group of the alcohol (molar ratio of isocyanate group/hydroxyl group) is preferably 2/1 or more and 50/1 or less. By having the molar ratio be equal to or more than the lower limit, it is possible to further reduce the viscosity of the polyisocyanate. By having the molar ratio be equal to or less than the upper limit, it is possible to further increase the yield of the urethane group-containing polyisocyanate.

The allophanate formation reaction can be carried out after the urethane formation reaction by reacting the formed urethane group with an isocyanate group, or by reacting two isocyanate groups with one hydroxyl group. The allophanate formation reaction may be carried out using an allophanate formation reaction catalyst.

Examples of the allophanate formation reaction catalyst include, but are not limited to, alkyl carboxylates of tin, lead, zinc, bismuth, zirconium, zirconyl, or the like, and the like.

Examples of the alkyl carboxylate of tin (organotin compounds) include tin 2-ethylhexanoate, dibutyltin dilaurate, and the like.

Examples of the alkyl carboxylate of lead (organic lead compounds) include lead 2-ethylhexanoate, and the like.

Examples of the alkyl carboxylate of zinc (organic zinc compounds) include zinc 2-ethylhexanoate, and the like.

Examples of the alkyl carboxylate of bismuth include bismuth 2-ethylhexanoate, and the like.

Examples of the alkyl carboxylate of zirconium include zirconium 2-ethylhexanoate, and the like.

Example of the alkyl carboxylate of zirconyl include zirconyl 2-ethylhexanoate, and the like.

These catalysts can be used alone or in combination of two or more.

The lower limit of the amount of the allophanate formation reaction catalyst to be used is preferably 10 ppm by mass, more preferably 15 ppm by mass, even more preferably 18 ppm by mass, and particularly preferably 20 ppm by mass, with respect to the mass of the charged isocyanate monomer.

The upper limit of the amount of the allophanate formation reaction catalyst to be used is preferably 1,000 ppm by mass, more preferably 800 ppm by mass, even more preferably 500 ppm by mass, and particularly preferably 300 ppm by mass, with respect to the mass of the charged isocyanate monomer.

That is, the amount of the allophanate formation reaction catalyst to be used is preferably 10 ppm by mass or more and 1,000 ppm by mass or less, more preferably 15 ppm by mass or more and 800 ppm by mass or less, even more preferably 18 ppm by mass or more and 500 ppm by mass or less, and particularly preferably 20 ppm by mass or more and 300 ppm by mass or less, with respect to the mass of the charged isocyanate monomer.

The lower limit of the allophanate formation reaction temperature is preferably 80°C, and more preferably 100°C.

The upper limit of the allophanate formation reaction temperature is preferably 200°C, and more preferably 180°C.

That is, the allophanate formation reaction temperature is preferably from 80°C to 200°C, and more preferably from 100°C to 180°C.

By setting the allophanate formation reaction temperature to the lower limit or higher, it is possible to further increase the reaction rate. By setting the allophanate formation reaction temperature to the upper limit or lower, it is possible to more effectively suppress coloration of the polyisocyanate.

In the allophanate formation reaction, the molar ratio of allophanate groups to urethane groups (molar ratio of allophanate group/urethane group) can be adjusted to the above-mentioned range by confirming the increase in the refractive index of the reaction solution. The reaction is stopped when the desired refractive index of the reaction solution is reached.

<Properties of polyisocyanate composition>

The isocyanate group content of the polyisocyanate composition of the present embodiment is preferably 5.0 mass% or more and 20.0 mass% or less, more preferably 6.0 mass% or more and 18.0 mass% or less, even more preferably 7.0 mass% or more and 15.0 mass% or less, particularly preferably 7.5 mass% or more and 13.0 mass% or less, and most preferably 8.5 mass% or more and 12.5 mass% or less. By having the isocyanate group content be equal to or more than the lower limit, it is possible to increase the concentration of urea bonds, which serve as binding points in the coating film, thereby enhancing the weather resistance of the coating film. On the other hand, by having the isocyanate group content be equal to or less than the upper limit, it is possible to prevent the concentration of urea bonds, which serve as binding points in the coating film, from becoming excessively high, thereby ensuring good elongation at a low temperature of about -20°C when the coating film is formed.

The isocyanate group content can be measured by the method described in the Examples later.

The lower limit of the viscosity at 25°C of the polyisocyanate composition of the present embodiment is preferably 100 mPa·s, more preferably 500 mPa·s, even more preferably 700 mPa·s, and particularly preferably 800 mPa·s. On the other hand, the upper limit of the viscosity is preferably 3,000 mPa·s, more preferably 2,500 mPa·s, even more preferably 2,000 mPa·s, and particularly preferably 1,700 mPa·s.
That is, the viscosity at 25°C of the polyisocyanate composition of the present embodiment is preferably 100 mPa·s or more and 3,000 mPa·s or less, more preferably 500 mPa·s or more and 2,500 mPa·s or less, even more preferably 700 mPa·s or more and 2,000 mPa·s or less, and particularly preferably 800 mPa·s or more and 1,700 mPa·s or less.
When the viscosity is equal to or more than the lower limit, there tends to be improved workability during the formulation of the coating material. On the other hand, when the viscosity is equal to or lower than the upper limit, the amount of solvent to be used during the production of the polyaspartic coating composition can be reduced.
The viscosity can be measured by the method described in the Examples later.

<<Polyisocyanate composition of embodiment 2>>

The polyisocyanate composition of the present embodiment includes a polyisocyanate derived from a diisocyanate, a first polyol, and a second polyol.
The diisocyanate is at least one selected from the group consisting of an aliphatic diisocyanate and an alicyclic diisocyanate.
The first polyol has a number average molecular weight of 200 to 2,000, an average number of hydroxyl groups of 2 or 3, and is at least one selected from the group consisting of a polyester polyol and a polyoxyalkylene polyol.
The second polyol is a monoalcohol, diol, or triol having a branched chain and having 2 to 20 carbon atoms.
The molar ratio of allophanate groups to urethane groups (molar ratio of allophanate group/urethane group) is 0/100 or more and 30/70 or less, preferably 2/98 or more and 30/70 or less, more preferably 3/97 or more and 30/70 or less, and even more preferably 5/95 or more and 20/80 or less. When the molar ratio of allophanate group/urethane group is equal to or more than the lower limit, crystallization can be further suppressed, and the polyisocyanate composition of the present embodiment can be blended as a uniform curing agent in a coating composition, particularly in a polyaspartic coating composition. This allows a coating film with excellent curability and surface appearance to be obtained. On the other hand, when the molar ratio of allophanate group/urethane group is equal to or less than the upper limit, a coating film with excellent weather resistance can be obtained.
The molar ratio of allophanate group/urethane group can be calculated, for example, by the $^{13}$C-NMR spectroscopy method. Specifically, it can be calculated using the method described in the Examples later.
The polyisocyanate composition of the present embodiment has the above-mentioned configuration, thereby making it possible to have good viscosity, suppress crystallization, and obtain a coating film with excellent appearance, weather resistance, and elongation at -20°C.
The polyisocyanate composition of the present embodiment can be suitably used as a curing agent for a polyaspartic coating composition containing an aspartic acid ester compound as a main component, namely, as a curing agent for polyaspartic coating materials.
Next, each of the constituent components contained in the polyisocyanate composition of the present embodiment will be described in detail below.

<Polyisocyanate>

The polyisocyanate contained in the polyisocyanate composition of the present embodiment is derived from a diisocyanate, a first polyol, and a second polyol. That is, the polyisocyanate is a reaction product of a diisocyanate, a first polyol, and a second polyol.
In addition, the polyisocyanate composition of the present embodiment may be a mixture of a polyisocyanate that is a reaction product of a diisocyanate, a first polyol and a second polyol, and a polyisocyanate that is a reaction product of the diisocyanate and the first polyol, or a polyisocyanate that is a reaction product of the diisocyanate and the second polyol.
The polyisocyanate also contains a urethane group. The urethane group is formed by a reaction of the isocyanate group of the diisocyanate with the hydroxyl group of the first polyol or the second polyol.
The polyisocyanate may contain both a urethane group and an allophanate group within a single molecule. The allophanate group is formed by a reaction between the urethane group and the isocyanate group of the diisocyanate, or by a reaction between the two isocyanate groups of the diisocyanate and one hydroxyl group of the first polyol or the second polyol.
Furthermore, the polyisocyanate may have other functional groups, such as an isocyanurate group or a uretdione group, in addition to the urethane group within a single molecule.

Alternatively, the polyisocyanate composition of the present embodiment may further contain, in addition to a polyisocyanate having a urethane group, a polyisocyanate having a urethane group and an allophanate group in the molecule, or a polyisocyanate having other functional groups, such as an allophanate group, an isocyanurate group, or a uretdione group, either alone or in combination of two or more of them.

In the polyisocyanate composition of the present embodiment, the molar ratio of uretdione groups to the total amount of isocyanurate groups, uretdione groups, allophanate groups, and urethane groups is preferably 0 mol% or more and 20 mol% or less, more preferably 0.3 mol% or more and 20 mol% or less, even more preferably 1 mol% or more and 10 mol% or less, and particularly preferably 2 mol% or more and 10 mol% or less. When the molar ratio of uretdione groups is equal to or more than the lower limit, crystallization of the polyisocyanate composition can be further suppressed, and the polyisocyanate composition of the present embodiment can be blended as a uniform curing agent in a coating composition, particularly in a polyaspartic coating composition. This allows a coating film with excellent curability and surface appearance to be obtained. In addition, the viscosity of the polyisocyanate composition can be lowered, making it possible to obtain a high-solid coating material. On the other hand, when the molar ratio of uretdione groups is equal to or less than the upper limit, the low-temperature elongation of the coating film can be improved.

In the polyisocyanate composition of the present embodiment, the molar ratio of isocyanurate groups to the total amount of isocyanurate groups, uretdione groups, allophanate groups, and urethane groups is preferably 0.01 mol% or more and 20.00 mol% or less, more preferably 0.01 mol% or more and 10.00 mol% or less, even more preferably 0.01 mol% or more and 5.00 mol% or less, and particularly preferably 0.01 mol% or more and 3.00 mol% or less. By having the molar ratio of isocyanurate groups be equal to or less than the upper limit, it is possible to further improve the low-temperature elongation of the coating film. On the other hand, a lower molar amount of the isocyanurate group results in an improved low-temperature elongation of the coating film.

The molar amount of each functional group in the polyisocyanate composition can be measured, for example, by the $^{13}C$-NMR spectroscopy method, and the molar ratio of the specific functional groups can be calculated using the calculated molar amount of each functional group. Specifically, it can be calculated using the method described in the Examples below.

[Diisocyanate]

The diisocyanate is at least one selected from the group consisting of an aliphatic diisocyanate and an alicyclic diisocyanate.

Examples of aliphatic diisocyanates include, but are not limited to, 1,4-diisocyanatobutane, 1,5-diisocyanatopentane (hereinafter sometimes abbreviated as "PDI"), ethyl (2,6-diisocyanato)hexanoate, 1,6-diisocyanatohexane (hereinafter sometimes abbreviated as "HDI"), 1,9-diisocyanatononane, 1,12-diisocyanatododecane, 2,2,4 or 2,4,4-trimethyl-1,6-diisocyanatohexane, etc. These aliphatic diisocyanates may be used alone or in combination of two or more.

Examples of alicyclic diisocyanates include, but are not limited to, 1,3 or 1,4-bis(isocyanatomethyl)cyclohexane (hereinafter sometimes abbreviated as "hydrogenated XDI"), 1,3 or 1,4-diisocyanatocyclohexane, 3,5,5-trimethyl-1-isocyanato-3-(isocyanatomethyl)cyclohexane (hereinafter sometimes abbreviated as "IPDI"), 4,4'-diisocyanato-dicyclohexylmethane (hereinafter sometimes abbreviated as "hydrogenated MDI"), 2,5 or 2,6-diisocyanatomethylnorbornane, etc. These alicyclic diisocyanates may be used alone or in combination of two or more.

These aliphatic diisocyanates and alicyclic diisocyanates may be used alone, or two or more of them may be used in combination.

Among these, the diisocyanate is preferably PDI, HDI, IPDI, hydrogenated XDI, or hydrogenated MDI, more preferably PDI, HDI, or IPDI, and even more preferably HDI.

In the production of polyisocyanates, in addition to the above-mentioned diisocyanates, isocyanate monomers such as those shown below may be further used.

(1) Aromatic diisocyanates such as diphenylmethane-4,4'-diisocyanate (MDI), 1,5-naphthalene diisocyanate, tolylene diisocyanate (TDI), xylylene diisocyanate (XDI), and m-tetramethylxylylene diisocyanate (TMXDI).

(2) Triisocyanates such as 4-isocyanatomethyl-1,8-octamethylene diisocyanate (hereinafter sometimes referred to as "NTI"), 1,3,6-hexamethylene triisocyanate (hereinafter sometimes referred to as "HTI"), bis(2-isocyanatoethyl) 2-isocyanatoglutarate (hereinafter sometimes referred to as "GTI"), and lysine triisocyanate (hereinafter sometimes referred to as "LTI").

[First polyol]

The number average molecular weight of the polyol is from 200 to 2,000, preferably from 300 to 1,500, more preferably from 350 to 1,200, and even more preferably from 400 to 1,000. When the number average molecular weight of the polyol is equal to or more than the lower limit, the elongation of the coating film at a low temperature of about -20°C is

large and good. On the other hand, when the number average molecular weight of the polyol is equal to or less than the upper limit, the viscosity of the polyisocyanate composition can be maintained at a lower level, making it possible to obtain a high-solid coating material.

The number average molecular weight Mn of the polyol is, for example, a number average molecular weight based on polystyrene standards as measured by GPC. When two or more polyols are used in combination, the number average molecular weight of the mixture is calculated.

The viscosity at 25°C of the polyol is preferably 90 mPa·s or more and 3,000 mPa·s or less, more preferably 100 mPa·s or more and 2,500 mPa·s or less, and even more preferably 100 mPa·s or more and 2,000 mPa·s or less. When the viscosity of the polyol is equal to or more than the lower limit, the elongation of the coating film at a low temperature of about -20°C increases and improves. On the other hand, when the viscosity of the polyol is equal to or less than the upper limit, the viscosity of the polyisocyanate composition can be maintained at a lower level, making it possible to obtain a high-solid coating material.

The viscosity at 25°C of the polyol can be measured by the method described in the Examples below.

The average number of hydroxyl groups in the polyol is 2 or 3.

By using a polyol with an average number of hydroxyl groups of 2, the viscosity of the polyisocyanate composition can be lowered, making it possible to obtain a high-solid coating material. In addition, because the polyisocyanate has fewer branches, the elongation of the coating film at a low temperature of about -20°C is greater and more favorable.

In addition, by using a polyol having an average number of hydroxyl groups of 3, crystallization can be further suppressed, and the polyisocyanate composition of the present embodiment can be blended as a uniform curing agent in a coating composition, particularly a polyaspartic coating composition, thereby obtaining a coating film with superior curability and surface appearance.

The polyol is at least one selected from the group consisting of a polyester polyol and a polyoxyalkylene polyol.

(Polyester polyol)

The number average molecular weight of the polyester polyol can be 200 or more and 2,000 or less, preferably 300 or more and 1,500 or less, more preferably 350 or more and 1,200 or less, and even more preferably 400 or more and 1,000 or less.

Examples of the polyester polyol include the following polyester polyols (1) and (2).

(1) Polyester polyols obtained by a condensation reaction between a dibasic acid alone or a mixture of two or more and an alcohol with two or more hydroxyl groups alone or a mixture of two or more.

(2) Polycaprolactone polyol obtained by ring-opening polymerization of ε-caprolactone with an alcohol with two or more hydroxyl groups.

Examples of the dibasic acid include carboxylic acids such as succinic acid, adipic acid, dimer acid, maleic anhydride, phthalic anhydride, isophthalic acid, terephthalic acid, 1,4-cyclohexanedicarboxylic acid, succinic anhydride, maleic acid, phthalic acid, glutaric acid, suberic acid, azelaic acid, sebacic acid, decanedioic acid, itaconic acid, itaconic anhydride, hexahydrophthalic acid, hexahydrophthalic anhydride, tetrahydrophthalic acid, and tetrahydrophthalic anhydride.

Examples of the alcohol with two or more hydroxyl groups include ethylene glycol, propylene glycol, diethylene glycol, 1,4-butanediol, neopentyl glycol, 1,6-hexanediol, trimethylpentanediol, cyclohexanediol, 2-ethyl-1,3-hexanediol, trimethylolpropane, glycerin, pentaerythritol, 2-methylolpropanediol, ethoxylated trimethylolpropane, 1,3-propanediol, pentane-1,5-diol, heptane 1,7-diol, octane-1,8-diol, nonane-1,9-diol, decane-1,10-diol, dodecane-1,12-diol, cyclohexane-1,4-dimethanol, 4,4'-(1-methylethylidene)biscyclohexanol, 1,1,1-trimethylolethane hexane-1 2,6-triol, dipropylene glycol, propane-1,2-diol, butane-1,3-diol, hexane-1,2-diol, 2-methylpentane-2,4-diol, 3-methylpentane-1,5-diol, octane-1,2-diol, 2-butyl-2-ethylpropane-1,3-diol, decane-1,2-diol, and 2-methyl-1,3-propanediol.

Among these, the polyester polyol is preferably a difunctional or trifunctional polycaprolactone polyol.

Examples of the commercially available difunctional polycaprolactone polyols include those manufactured by Daicel Corporation under the trade names "PLACCEL 210" (number average molecular weight: 1,000), "PLACCEL 210CP" (number average molecular weight: 1,000), "PLACCEL 212" (number average molecular weight: 1,250), "PLACCEL 212CP" (number average molecular weight: 1,250), "PLACCEL 220" (number average molecular weight: 2,000), "PLACCEL 220CPB" (number average molecular weight: 2,000), and "PLACCEL 220CPT" (number average molecular weight: 2,000); those manufactured by Ingevity under the trade names "Capa 2043" (number average molecular weight: 400, viscosity at 25°C: 246 mPa·s), "Capa 2054" (number average molecular weight: 550, viscosity at 25°C: 360 mPa·s), "Capa 2085" (number average molecular weight: 830, viscosity at 25°C: 627 mPa·s), and "Capa 2067A" (number average molecular weight: 650, viscosity at 25°C: 493 mPa·s); and the like.

In addition, examples of the commercially available difunctional polyester polyols include those manufactured by

Kuraray Co., Ltd. under the trade name "Kuraray Polyol P-510" (number average molecular weight: 500, viscosity at 25°C: 540 mPa·s); those manufactured by DIC Corporation under the trade name "ODX2406" (number average molecular weight: 440, viscosity at 25°C: 460 mPa·s); and the like.

Examples of the commercially available trifunctional polycaprolactone polyols include those manufactured by Daicel Corporation under the trade names "PLACCEL 305" (number average molecular weight: 550), "PLACCEL 308" (number average molecular weight: 850), "PLACCEL 309" (number average molecular weight: 900), "PLACCEL 312" (number average molecular weight: 1,250), and "PLACCEL 320" (number average molecular weight: 2,000); those manufactured by DIC Corporation under the trade name "ODX2542C" (number average molecular weight: 850); those manufactured by Ingevity under the trade names "Capa3050" (number average molecular weight: 540, viscosity at 60°C 160 mPa·s) and "Capa23091" (number average molecular weight: 900, viscosity at 60°C 165 mPa·s); and the like.

(Polyoxyalkylene polyol)

The polyoxyalkylene polyol is a divalent to tetravalent polyol containing a repeating unit represented by $-O(CH_2)_n-$ and can be derived from a divalent to tetravalent alcohol and ethylene oxide, propylene oxide, tetrahydrofuran, etc. In addition, although there is no particular limitation, for example, it can be obtained by cationic polymerization of ethylene oxide, propylene oxide, tetrahydrofuran, etc. with a divalent to tetravalent alcohol as an initiator in the presence of a catalyst.

The number average molecular weight of the polyoxyalkylene polyol is preferably 200 or more and 2,000 or less, more preferably 200 or more and 1,500 or less, and even more preferably 200 or more and 1,000 or less.

Examples of initiators include:

dihydric alcohols: ethylene glycol, propylene glycol, diethylene glycol, 1,4-butanediol, 1,3-butylene glycol, neopentyl glycol, 1,6-hexanediol, trimethylpentanediol, cyclohexanediol, pentaerythritol, 2-methylolpropanediol, 2-ethyl-1,3-hexanediol, 1,3-propanediol, pentane-1,5-diol, heptane-1,7-diol, octane-1,8-diol, nonane 1,9-diol decane-1,10-diol, dodecane-1,12-diol, cyclohexane 1,4-dimethanol, 4,4 '(1-methylethylidene)biscyclohexanol, 1,1,1trimethylolethane, hexane-1,2,6-triol, dipropylene glycol, propane-1,2-diol, butane-1,3-diol, hexane-1,2-diol, 2-methylpentane-2,4-diol, 3-methylpentane-1,5-diol, octane-1,2-diol, 2-butyl-2-ethylpropane-1,3-diol, decane-1,2-diol, and 2-methyl-1,3-propanediol;
trihydric alcohols: glycerin and trimethylolpropane, and
tetrahydric alcohols: pentaerythritol.

From the viewpoint of obtaining a polyisocyanate component with a low viscosity, a branched polyhydric alcohol is preferred.

As the catalyst, a hydroxide of lithium, sodium, potassium, or the like, or a strongly basic catalyst such as an alcoholate or an alkylamine can be used.

Cationic polymerization of ethylene oxide, propylene oxide, tetrahydrofuran, or the like is preferably carried out in a nitrogen gas atmosphere by setting a molar ratio of ethylene oxide, propylene oxide, tetrahydrofuran, or the like and the above-mentioned initiator so as to obtain a predetermined molecular weight, adding 0.1 ppm to 100 ppm of a catalyst to the ethylene oxide, propylene oxide, tetrahydrofuran, or the like, and reacting at a temperature of 150°C to 200°C for 4 hours to 10 hours.

Examples of the commercially available difunctional polyoxyalkylene polyols include those manufactured by SK Chemicals under the trade names "ECOTRION H1000" (number average molecular weight: 1,000, viscosity at 25°C: 489 mPa·s) and "ECOTRION H2000" (number average molecular weight: 2,000, viscosity at 25°C: 1,701 mPa·s); those manufactured by Allessa under the trade name "Velvet H250" (number average molecular weight: 227, viscosity at 25°C: 107 mPa·s); those manufactured by Mitsubishi Chemical under the trade name "BioPTMG650" (number average molecular weight: 655, viscosity at 25°C: 351 mPa·s); and the like.

The polyol preferably contains two types of polyester polyols having different structures, or a polyester polyol and a polyoxyalkylene polyol. By containing the above combination of two types of polyols, crystallization can be further suppressed.

Furthermore, when two types of polyester polyols having different structures, or a polyester polyol and a polyoxyalkylene polyol are used in combination, the blending ratio may be appropriately adjusted so that the number average molecular weight falls within the above-mentioned range. For example, these polyester polyols can be blended in a mass ratio of 3:1 to 1:3, 2:1 to 1:2, or 1.5:1 to 1:1.5.

The content of polyoxyalkylene polyol is preferably 30 mass% or less, more preferably 28 mass% or less, even

more preferably 15 mass% or less, and particularly preferably 10 mass% or less, with respect to the total mass of the first polyol and the second polyol. By making the content of polyoxyalkylene polyol below the upper limit, the weather resistance of the coating film can be improved. The lower limit of the content of polyoxyalkylene polyol is not particularly limited, and can be, for example, 0 mass%, 1 mass%, 2 mass%, 3 mass%, or the like.

When a polyol having an average number of hydroxyl groups of 2 and a polyol having an average number of hydroxyl groups of 3 are used in combination, it is preferable to contain more polyol having an average number of hydroxyl groups of 2 than polyol having an average number of hydroxyl groups of 3. Specifically, the content of the polyol having an average number of hydroxyl groups of 3 is preferably 30 mass% or less, more preferably 28 mass% or less, even more preferably 15 mass% or less, and particularly preferably 10 mass% or less, with respect to the total mass of the first polyol and the second polyol. By having the content of the polyol having an average number of hydroxyl groups of 3 being equal to or less than the upper limit, it is possible to improve the elongation at a low temperature of about -20°C when formed into a coating film. The lower limit of the content of the polyol having an average number of hydroxyl groups of 3 is not particularly limited, and can be, for example, 0 mass%, 1 mass%, 2 mass%, 3 mass%, or the like.

[Second polyol]

In the polyisocyanate composition of the present embodiment, by using the second polyol in addition to the first polyol, the composition is almost free of turbidity and can suppress crystallization, and the polyisocyanate composition of the present embodiment can be blended as a uniform curing agent in a coating composition, particularly a polyaspartic coating composition, thereby obtaining a coating film with excellent curability and surface appearance.

The second polyol is a monoalcohol, diol, or triol having a branched chain and having 2 to 20 carbon atoms.

The monoalcohol may contain one or more groups selected from the group consisting of an ether group, an ester group, a carbonyl group and a phenyl group in the molecule, and examples thereof include a benzyl alcohol, preferably a monoalcohol consisting only of a saturated hydrocarbon group. In addition, a branched monoalcohol is more preferable. Examples of such monoalcohols include a 1-hexanol, a 2-hexanol, a 1-heptanol, a 1-octanol, a 2-ethyl-1-hexanol, a 3,3,5-trimethyl-1-hexanol, a tridecanol pentadecanol, a palmityl alcohol, a stearyl alcohol, a cyclopentanol, a cyclohexanol, a methylcyclohexanol, a trimethylcyclohexanol, and the like.

Examples of the diol include a linear aliphatic diol such as an ethylene glycol, a 1,3-propanediol, a 1,2-propanediol, a 1,3-butanediol, a 1,4-butanediol, 2,3-butanediol, a 1,5-pentanediol, a 1,2-pentanediol, a 1,3-pentanediol, a 1,4-pentanediol, a neopentyl glycol, a 1,6-hexanediol, a 1,7-heptanediol, a 1,8-octanediol, a 1,9-nonanediol, a 1,10-decanediol, a diethylene glycol, a polyethylene glycol, a polypropylene glycol, a polytetramethylene glycol, or the like; and a branched aliphatic diol such as a 2-ethyl-1,3-hexanediol, a 2,4-diethyl-1,5-pentanediol, a 2-methyl-1,3-propanediol, a 3-methyl-1,5-pentanediol, a 2-methyl-1,8-octanediol, a 2,2-diethyl-1,3-propanediol, or the like. These may be used alone or in combination of two or more. Among these, it is preferable to use a branched aliphatic diol because it is possible to further suppress crystallization.

Examples of the trialcohol include a glycerin, a trimethylolpropane, and the like.

Among them, the second polyol is preferably a diol having a branched chain and having a carbon number of 3 to 20. By using a diol having a branched chain and having a carbon number of 3 to 20, crystallization can be further suppressed.

The content of the second polyol can be 35 mass% or less, preferably 1 mass% or more and 30 mass% or less, more preferably 5 mass% or more and 20 mass% or less, even more preferably 5 mass% or more and 15 mass% or less, and particularly preferably 8 mass% or more and 12 mass% or less, with respect to the total mass of the first polyol and the second polyol. By having the content of the second polyol be equal to or more than the above lower limit, the composition is almost free of turbidity and can maintain better crystallinity, and the polyisocyanate composition of the present embodiment can be blended as a more uniform curing agent in a paint composition, particularly a polyaspartic paint composition. This allows for a coating film with better curability and surface appearance to be obtained. On the other hand, by having the content of the second polyol be equal to or less than the above upper limit, the viscosity can be made lower and better. In addition, the coating film can have improved elongation at a low temperature of about -20°C.

<Other components>

The polyisocyanate composition of the present embodiment preferably contains one or more selected from the group consisting of an ultraviolet absorber and a light stabilizer. By containing an ultraviolet absorber and a light stabilizer, a coating film having more excellent weather resistance can be obtained.

The ultraviolet absorbing agent is not particularly limited, and examples thereof include benzotriazole-based compounds, triazine-based compounds, benzophenone-based compounds, cyanoacrylate-based compounds, and the like.

The benzotriazole-based compound is not particularly limited, and examples thereof include those manufactured by BASF Japan Ltd. under the trade names Tinuvin P PS 99-2, 213, 234, 326, 329, 360, 384-2, 571, 900, 928, 970, and 1130; those manufactured by ADEKA CORPORATION under the trade names ADK STAB LA-24, 29, 31RG, 31G, 32, 36, 36RG, and F70; those manufactured by Taiwan Yongkou Chemical Industry Co., Ltd. under the trade names EVERSORB 70, 71, 72, 73, 74, 75, 76, 77, 78, 79, 80, 81, 82, 88, 89, 109, and 234; and the like.

The triazine-based compound is not particularly limited, and examples thereof include those manufactured by BASF Japan Ltd. under the trade names Tinuvin 400, 400-DW, 405, 460, 477, 479, 479-DW, 1577ED, and 1600; those manufactured by Taiwan Yong Guang Chemical Industry Co., Ltd. under the trade names EVERSORB 40, 41FD, and 45; and the like.

The benzophenone-based compound is not particularly limited, and examples thereof include those manufactured by BASF Japan Ltd. under the trade names Chimassorb 81, 81FL, Uvinul 3049, and 3050; those manufactured by ADEKA Corporation under the trade name ADK STAB 1413; those manufactured by Taiwan Eikoh Chemical Industry Co., Ltd. under the trade names EVERSORB 10, 11, 12, 51, and 52;

and the like.

The cyanoacrylate-based compound is not particularly limited, and examples thereof include those manufactured by BASF Japan Ltd. under the trade names Uvinul 3030FF, 3035, and 3039; and the like.

From the viewpoint of maintaining weather resistance of the coating film over a long period of time, benzotriazole-based compounds, triazine-based compounds, and benzophenone-based compounds are preferable, and benzotriazole-based compounds and triazine-based compounds are more preferable.

The light stabilizer is not particularly limited, and specific examples thereof include hindered amine compounds and the like.

Examples of the hindered amine compound include, but are not limited to, those manufactured by BASF Japan Ltd. under the trade names Tinuvin 111FDL, 123, 123-DW, PA144, 152, 249, 292, 783FDL, and 765; those manufactured by ADEKA CORPORATION under the trade names ADK STAB LA-52, 57, 63P, 68, 72, 77Y, 77G, 81, 402AF; those manufactured by Taiwan Yongkou Chemical Industry Co., Ltd. under the trade names EVERSORB 60, 61, 90, 91FD, 93, 94FD, 95, 765, S02; and the like.

The ultraviolet absorbents and the light stabilizers may each be used alone or in combination of two or more.

The total amount of the ultraviolet absorber and the light stabilizer to be added is preferably 10 ppm by mass or more and 15,000 ppm by mass or less with respect to the total mass of the polyisocyanate composition.

The polyisocyanate composition of the present embodiment may further contain an antioxidant.

The antioxidant may, for example, be a hindered phenol-based antioxidant.

Examples of the hindered phenol-based antioxidant include, but are not limited to, a dibutylhydroxytoluene (hereinafter, may be abbreviated as "BHT"); those manufactured by BASF Corporation under the trade names "Irganox 1010", "Irganox 1135", "Irganox 1330", "Irganox 3114", "Irganox 565", and "Irganox 1520L"; those manufactured by ADEKA Corporation under the trade names "ADK STAB AO-20", "ADK STAB AO-30", "ADK STAB AO-50", "ADK STAB AO-60", and "ADK STAB AO-80"; and the like.

<Method for producing polyisocyanate composition>

The polyisocyanate composition of the present embodiment can be obtained by simultaneously reacting an excess of diisocyanate with a first polyol and a second polyol, or by reacting an excess of diisocyanate with a first polyol and then reacting with a second polyol, or by reacting an excess of diisocyanate with a second polyol and then reacting with a first polyol, or by mixing a polyisocyanate obtained by reacting an excess of a diisocyanate with a first polyol and a polyisocyanate obtained by reacting an excess of a diisocyanate with a second polyol. After each reaction is completed, unreacted diisocyanate monomers may be removed.

The reaction of the excess diisocyanate with the first polyol or the second polyol is a known urethane formation reaction. Hereinafter, the first polyol and the second polyol may be collectively referred to as polyol.

The urethane formation reaction can be carried out by mixing an excess of diisocyanate with a polyol, and adding a urethane formation reaction catalyst as necessary.

The urethane formation reaction catalyst is not particularly limited, and examples thereof include tin-based compounds, zinc-based compounds, amine-based compounds, and the like.

The urethane formation reaction temperature is preferably from 50°C to 160°C, and more preferably from 60°C to 120°C.

By controlling the urethane formation reaction temperature to be equal to or lower than the upper limit, coloration of the polyisocyanate tends to be more effectively suppressed.

The urethane formation reaction time is preferably from 30 minutes to 4 hours, more preferably from 1 hour to 3 hours, and even more preferably from 1 hour to 2 hours.

The ratio of the molar amount of the isocyanate group of the isocyanate monomer to the molar amount of the hydroxyl group of the alcohol (isocyanate group/hydroxyl group molar ratio) is preferably 2/1 or more and 50/1 or less. By having the molar ratio be equal to or more than the lower limit, it is possible to further reduce the viscosity of the polyisocyanate. By having the molar ratio be equal to or less than the upper limit, it is possible to further increase the yield of the urethane group-containing polyisocyanate.

After the urethane formation reaction, an allophanate formation reaction can be carried out. The allophanate formation reaction can be carried out by reacting an isocyanate group with the formed urethane group, or by reacting two isocyanate groups with one hydroxyl group. That is, the allophanate formation reaction may be carried out continuously after the urethane formation reaction, or a polyisocyanate obtained by a separate allophanate formation reaction may be mixed with the polyisocyanate obtained by the urethane formation reaction. The allophanate formation reaction may be carried out using an allophanate formation reaction catalyst.

Examples of the allophanate formation reaction catalyst include, but are not limited to, alkyl carboxylates of tin, lead, zinc, bismuth, zirconium, zirconyl, and the like.

Examples of the alkyl carboxylate of tin (organic tin compound) include a tin 2-ethylhexanoate, a dibutyltin dilaurate, and the like.

Example of the alkyl carboxylate of lead (organic lead compound) include a lead 2-ethylhexanoate, and the like.

Examples of the alkyl carboxylate of zinc (organic zinc compound) include a zinc 2-ethylhexanoate, and the like.

Examples of the alkyl carboxylate of bismuth include a bismuth 2-ethylhexanoate, and the like.

Examples of the zirconium alkyl carboxylate includes a zirconium 2-ethylhexanoate, and the like.

Examples of the zirconyl alkyl carboxylate include a zirconyl 2-ethylhexanoate, and the like.

These catalysts can be used alone or in combination of two or more.

The lower limit of the amount of the allophanate formation reaction catalyst to be used is preferably 10 ppm by mass, more preferably 15 ppm by mass, even more preferably 18 ppm by mass, and particularly preferably 20 ppm by mass, with respect to the mass of the charged isocyanate monomer.

The upper limit of the amount of the allophanate formation reaction catalyst to be used is preferably 1,000 ppm by mass, more preferably 800 ppm by mass, even more preferably 500 ppm by mass, and particularly preferably 300 ppm by mass, with respect to the mass of the charged isocyanate monomer.

That is, the amount of the allophanate formation reaction catalyst to be used is preferably 10 ppm by mass or more and 1,000 ppm by mass or less, more preferably 15 ppm by mass or more and 800 ppm by mass or less, even more preferably 18 ppm by mass or more and 500 ppm by mass or less, and particularly preferably 20 ppm by mass or more and 300 ppm by mass or less, with respect to the mass of the charged isocyanate monomer.

The lower limit of the allophanate formation reaction temperature is preferably 80°C, and more preferably 100°C.

The upper limit of the allophanate formation reaction temperature is preferably 200°C, and more preferably 180°C.

That is, the allophanate formation reaction temperature is preferably 80°C or higher and 200°C or lower, and more preferably 100°C or higher and 180°C or lower.

By setting the allophanate formation reaction temperature to the lower limit or higher, it is possible to further increase the reaction rate. By setting the allophanate formation reaction temperature to the upper limit or lower, it is possible to more effectively suppress coloration of the polyisocyanate.

In the allophanate formation reaction, the molar ratio of allophanate groups to urethane groups (molar ratio of allophanate group/urethane group) can be adjusted to the above range by checking the increase in the refractive index of the reaction solution. The reaction is stopped when the desired refractive index of the reaction solution is reached.

<Properties of polyisocyanate composition>

The isocyanate group content of the polyisocyanate composition of the present embodiment is preferably 5.0 mass% or more and 20.0 mass% or less, more preferably 7.0 mass% or more and 18.0 mass% or less, even more preferably 7.5 mass% or more and 15.0 mass% or less, particularly preferably 8.5 mass% or more and 15.0 mass% or less, and most preferably 10.0 mass% or more and 13.5 mass% or less. By having the isocyanate group content be equal to or more than the lower limit, the concentration of urea bonds that serve as binding points in the coating film can be increased, and the weather resistance of the coating film can be improved. On the other hand, by having the isocyanate group content be equal to or less than the upper limit, the concentration of urea bonds that serve as binding points in the coating film can be prevented from increasing too much, and the elongation at a low temperature of about -20°C can be improved when the coating film is formed.

The isocyanate group content can be measured by the method described in the Examples below.

The lower limit of the viscosity at 25°C of the polyisocyanate composition of the present embodiment is preferably 100 mPa·s, more preferably 500 mPa·s, even more preferably 700 mPa·s, and particularly preferably 800 mPa·s. On the other hand, the upper limit of the viscosity is preferably 3,000 mPa·s, more preferably 2,500 mPa·s, even more preferably

2,000 mPa·s, and particularly preferably 1,750 mPa·s.

That is, the viscosity at 25°C of the polyisocyanate composition of the present embodiment is preferably 100 mPa·s or more and 3,000 mPa·s or less, more preferably 500 mPa·s or more and 2,500 mPa·s or less, even more preferably 700 mPa·s or more and 2,000 mPa·s or less, and particularly preferably 800 mPa·s or more and 1,750 mPa·s or less.

When the viscosity is equal to or higher than the lower limit, workability during the formulation of the coating material tends to be maintained. On the other hand, when the viscosity is equal to or lower than the upper limit, the amount of solvent used during the production of the polyaspartic coating composition can be reduced.

The viscosity can be measured by the method described in the Examples below.

<Polyaspartic coating composition>

The polyaspartic coating composition of the present embodiment contains the polyisocyanate composition of the above-mentioned aspect 1 or aspect 2, and an aspartic acid ester compound.

The aspartic acid ester compound is a compound represented by the following general formula (I).

[Chemical formula 1]

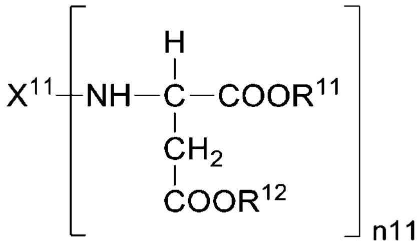

(I)

In the general formula (I), $X^{11}$ is an n-valent organic group obtained by removing a primary amino group of an n11-valent polyamine. $R^{11}$ and $R^{12}$ are the same or different organic groups that are inactive to isocyanate groups under the reaction conditions. n11 is an integer of 2 or more.

$X^{11}$ in formula (I) is not particularly limited, but from the viewpoint of yellowing resistance, it is preferably an organic group based on an aliphatic and/or alicyclic polyamine having no aromatic group, and, for example, it is an n11-valent polyamine selected from the following group: ethylenediamine, 1,2-diaminopropane, 1,4-diaminobutane, 1,5-diaminopentane, 1,6-diaminohexane, 2,5-diamino-2,5-dimethylhexane, 2,2,4- and/or 2,4,4-trimethyl-1,6-diaminohexane, 1,11-diaminoundecane, 1,12-diaminododecane, 1-amino-3,3,5-trimethyl-5-aminomethylcyclohexane, 2,4- and/or 2,6-hexahydrotolylenediamine, 2,4'- and/or 4,4'-diaminodicyclohexylmethane, 3,3'-dimethyl-4,4'-diaminodicyclohexylmethane, 2,4,4'-triamino-5-methyldicyclohexylmethane, and organic groups based on polyether polyamines having a number average molecular weight of 148 to 6,000 and in which a primary amino group is bonded to an aliphatic group, and the like.

Among them, $X^{11}$ is preferably an organic group based on 1,4-diaminobutane, 1,5-diaminopentane, 1,6-diaminohexane, 2,2,4 and/or 2,4,4-trimethyl-1,6-diaminohexane, 1-amino-3,3,5-trimethyl-5-aminomethylcyclohexane, 4,4'-diaminodicyclohexylmethane, or 3,3'-dimethyl-4,4'-diaminodicyclohexylmethane, and more preferably an organic group based on 4,4'-diaminodicyclohexylmethane or 3,3'-dimethyl-4,4'-diaminodicyclohexylmethane.

The term "inert to isocyanate groups under reaction conditions" as defined for $R^{11}$ and $R^{12}$ in formula (I) means that these groups do not have a Zerewitinoff active hydrogen-containing group (CH acidic compound) such as a hydroxyl group, an amino group, or a thiol group.

$R^{11}$ and $R^{12}$ are each preferably an alkyl group having 1 to 10 carbon atoms, and more preferably a methyl group, an ethyl group, or a butyl group.

In formula (1), n11 is preferably an integer of 2 or more and 6 or less, more preferably an integer of 2 or more and 4 or less, and even more preferably 2.

A preferred aspartic acid ester compound is, for example, an aspartic acid ester compound derived from two molecules of aspartic acid having a secondary amino group and one molecule of 4,4'-diaminodicyclohexylmethane.

As the aspartic acid ester compound, commercially available products may be used. Examples of the commercially available aspartic acid ester compounds include those manufactured by Evonik under the trade names "Amicure IC-221" (amine value: 188 mg KOH/resin g, viscosity: 450 mPa·s (representative value measured at 25°C)), "Amicure IC-321" (amine value: 190 mg KOH/resin g, viscosity: 450 mPa·s (representative value measured at 25°C)), and "Amicure IC-322" (amine value: 189 mg KOH/resin g, viscosity: 150 mPa·s (representative value measured at 25°C)); those

manufactured by Feiyang under the trade names "Feispartic F420" (amine value: 201 mg KOH/resin g, viscosity: 1,450 mPa·s (representative value measured at 25°C)), and "Feispartic F520" (amine value: 189 mg KOH/g resin, viscosity: 1,400 mPa·s (representative value measured at 25° C.)); and the like.

The above-mentioned aspartic acid ester compounds may be used alone or in combination of two or more.

The method for producing the aspartic acid ester compound is not particularly limited, and, for example, it may be produced by reacting a primary polyamine represented by the following formula (II) with a maleic acid ester of a fumaric acid ester represented by the following formula (III).

$$X^{11}[NH_2]_{n11} \quad (II)$$

$$R^{11}OOC\text{-}CH\text{=}CH\text{-}COOR^{12} \quad (III)$$

(In the above formula, $X^{11}$, $R^{11}$, $R^{12}$, and n11 are the same as those in formula (I).)

Suitable polyamines are not particularly limited, and examples thereof include the diamines listed above as the basis for $X^{11}$.

In addition, suitable maleic acid esters or fumaric acid esters are not particularly limited, and examples thereof include maleic acid esters or fumaric acid esters having the groups defined as $R^{11}$ and $R^{12}$ in formula (I) as $R^{11}$ and $R^{12}$. Among these, maleic acid esters or fumaric acid esters in which $R^{11}$ and $R^{12}$ are alkyl groups having 1 to 10 carbon atoms are preferable, and a dimethyl maleate, a diethyl maleate, a dibutyl maleate, a dimethyl fumarate, a diethyl fumarate, or a dibutyl fumarate is more preferable.

The production of the aspartic acid ester compounds from the starting materials is preferably carried out at a temperature range of 0°C to 100°C. The starting materials are used in a ratio such that at least one, preferably only one, olefinic double bond is present in each of the primary amino groups. If desired, the reaction can be followed by distillation to remove excess starting materials. The reaction can be carried out in bulk or in the presence of a suitable solvent, such as, but not limited to, a methanol, an ethanol, a propanol, or a dioxane, or a mixture of such solvents.

<Isocyanate group/Amino group>

The molar ratio of isocyanate groups of the polyisocyanate composition to the amino groups of the aspartic acid ester compound (isocyanate group/amino group) is preferably 1/10 or more and 10/1 or less, more preferably 1/5 or more and 5/1 or less, and even more preferably 1/2 or more and 2/1 or less.

By having the isocyanate group/amino group be equal to or more than the lower limit, the main agent does not become excessive, and the resulting coating film can have good elongation at a low temperature of about -20°C. Furthermore, by having the isocyanate group/amino group be within the above numerical range, a good balance between the isocyanate group and the amino group can be maintained, making it possible to increase the concentration of urea bonds, which serve as bonding points in the coating film, and to provide good weather resistance in the coating film.

<Other components>

The polyaspartic coating composition of the present embodiment may further contain other base components, such as polyol-containing polyvalent active hydrogen compounds, melamine resins, epoxy resins, polyurethane resins, or the like, as necessary.

In addition, when the above-mentioned polyol has a carboxy group, an oxazoline group-containing compound and a carbodiimide group-containing compound can be blended. In addition, when the above-mentioned polyol has a carbonyl group, a hydrazide group-containing compound and a semicarbazide group-containing compound can be blended. These compounds may be blended alone or in combination of two or more.

The polyaspartic coating composition of the present embodiment preferably further contains a surface conditioner as an additive, since the appearance of the coating film is more excellent. The type of surface conditioner is not particularly limited, and examples thereof include silicone-based conditioners, acrylic-based surface conditioners, and the like.

The content of the surface conditioner is preferably 0.05 mass% or more and 5 mass% or less based on the resin content of the polyaspartic coating composition. By making the content of the surface conditioner equal to or more than the lower limit, the appearance of the coating film can be improved. On the other hand, by making the content of the surface conditioner equal to or less than the upper limit, the coating film can have improved cissing resistance, recoatability, and stain resistance.

As the silicon-based surface conditioner, commercially available products may be used, and examples thereof include BYK-300, BYK-302, BYK-306, BYK-307, BYK-310, BYK-313, BYK-315N, BYK-320, BYK-322, BYK-323, BYK-325, BYK-326, BYK-330, BYK-331, BYK-333, BYK-342, BYK-370, BYK-375, BYK-377, BYK-378, and

BYK-3760 (manufactured by BYK Corporation); Disparlon 1711EF, Disparlon 1761, Disparlon LS-001, Disparlon LS-050, Disparlon LS-280, Disparlon LS-460, and Disparlon LS-480 (manufactured by Kusumoto Chemicals Co., Ltd.); Tego Flow 425, Tego Glide 100, Tego Glide 110, Tego Glide 130, Tego Glide 406, Tego Glide 420, Tego Glide 432 Tego Glide 435, Tego Glide 440, Tego Glide 450 Tego Glide 482, Tego Glide 485, Tego Glide ZG400, Tego wet KL245, Tego wet 250, Tego wet 260, Tego wet 265, Tego wet 270, and Tego wet 280 (manufactured by Evonik Tego Chemie Co., Ltd.); and the like. These may be used alone or in combination of two or more.

As the acrylic surface conditioner, commercially available products may be used, and examples thereof include BYK-350, BYK-354, BYK-355, BYK-356, BYK-358N, BYK-361N, BYK-392, BYK-394, and BYK-3441 (manufactured by BYK Corporation); Disparlon LF-1983, Disparlon LF-1984, LF-1985, Disparlon UVX-35, and Disparlon UVX-36 (manufactured by Kusumoto Chemicals Co., Ltd.); Tego Flow 300, Tego Flow 370, Tego Flow ATF2, and Tego Flow ZFS460 (manufactured by Evonik Tego Chemie Co., Ltd.); and the like. These may be used alone or in combination of two or more.

As the above-mentioned other types of surface conditioners, commercially available products may be used, and examples thereof include BYK-399, BYK-3440, BYK-3550, BYK-3560, BYK-3565, BYK-SILCLEAN 3700, BYK-SILCLEAN 3701, and BYKETOL-OK (manufactured by BYK Corporation); Disparlon UVX-272, Disparlon UVX-2285, Disparlon LHP-810, Disparlon NSH-8430HF, Disparlon LHP-90, Disparlon LHP-91, Disparlon LHP-95, and Disparlon LHP-96 (manufactured by Kusumoto Chemicals Co., Ltd.); and the like. These may be used alone or in combination of two or more.

The polyaspartic coating composition of the present embodiment preferably further contains an antifoaming/-foam suppressing/defoaming agent as an additive, since this provides an improved appearance when formed into a coating film. The type of antifoaming/foam suppressing/defoaming agent is not particularly limited, and examples thereof include silicone-based agents, polymer-based agents, and the like.

The content of the antifoaming/foam suppressing/defoaming agent is preferably 0.05 mass% or more and 5 mass% or less with respect to the resin content of the polyaspartic coating composition. By having the content of the antifoaming/foam suppressing/defoaming agent be equal to or more than the lower limit, the workability during the blending and stirring can be improved, and the appearance of the coating film can be improved. On the other hand, by having the content of the antifoaming/foam suppressing/defoaming agent be equal to or less than the upper limit, the cissing resistance, recoatability, and contamination resistance of the coating film can be improved.

As the silicone-based antifoaming/foam suppressing/defoaming agent, commercially available products may be used, and examples thereof include BYK-063, BYK-065, BYK-066N, BYK-067A, BYK-077, and BYK-081, BYK-1799 (manufactured by BYK Corporation); Disparlon 1930N, Disparlon 1934, and Disparlon SPX-44 (manufactured by Kusumoto Chemicals Co., Ltd.); Tego Airex 900, Tego Airex 916, Tego Airex 931, Tego Airex 935, Tego Airex 962, Tego Airex 980, and Tego Foamex N (Evonik Tego Chemie Co., Ltd.); and the like. These may be used alone or in combination of two or more.

As the polymer-based antifoaming/foam suppressing/defoaming agent, commercially available products may be used, and examples thereof include BYK-051N, BYK-052N, BYK-054, BYK-055, BYK-057, BYK-354, BYK-392, BYK-1752, BYK-1788, BYK-1790, BYK-1791, and BYK-1794 (manufactured by BYK Corporation); Disparlon OX-60, Disparlon OX-6140, Disparlon OX-70, Disparlon OX-710, Disparlon OX-750HF, Disparlon OX-77EF, Disparlon OX-880EF, Disparlon OX-881, Disparlon OX-883HF Disparlon LAP-10, Disparlon LAP-20, Disparlon LAP-30, Disparlon 1952, Disparlon 1958, Disparlon 1960, Disparlon P-410EF, Disparlon PD-7, Disparlon P-420, Disparlon P-450, Disparlon OX-881, Disparlon OX-883HF, Disparlon LAP-10, Disparlon P-425, Disparlon UVX-188 Disparlon UVX-189, and Disparlon UVX-190 (manufactured by Kusumoto Chemicals Co., Ltd.); Tego Airex 910, Tego Airex 920, Tego Airex 936, Tego Airex 944, and Tego Airex 955 (Evonik Tego Chemie Co., Ltd.); and the like. These may be used alone or in combination of two or more.

As the above-mentioned other types of antifoaming/foam suppressing/defoaming agents, commercially available products may be used, and examples thereof include BYK-088 and BYK-141 (manufactured by BYK Corporation); Disparlon OX-66EF and Disparlon OX-715 (manufactured by Kusumoto Chemicals Co., Ltd.); Tego Airex 940, Tego Airex 945, Tego Airex 950, and Tego Airex 986 (manufactured by Evonik Tego Chemie Co., Ltd.); and the like. These may be used alone or in combination of two or more.

The polyaspartic coating composition of the present embodiment may further contain one or more selected from the group consisting of the above-mentioned ultraviolet absorbers and light stabilizers.

The polyaspartic coating composition of the present embodiment may further include a molecular sieve. Molecular sieve is the name of a natural or synthetic zeolite with a relatively high internal surface and uniform pore size. Molecular sieves have a relatively high adsorption capacity. Therefore, molecular sieves are particularly used as adsorbents, for example, as a water absorbent.

Suitable molecular sieves have a pore size of at least 2.0 Angstroms and at most 10 Angstroms, preferably at least 2.5 Angstroms and at most 4.0 Angstroms, and more preferably about 3.0 Angstroms.

The polyaspartic coating composition of the present embodiment generally contains 0.1 mass% or more and 15 mass% or less, and preferably 0.5 mass% or more and 8 mass% or less, of molecular sieves, with respect to the total mass

of the composition.

The polyaspartic coating composition of the present embodiment may further contain a matting agent. The matting agent is not particularly limited, and examples thereof include a dry silica, a precipitated silica, and the like.

The dry silica is not particularly limited, and examples thereof include those manufactured by Evonik Japan Co., Ltd. under the trade names "ACEMATT 3400", "ACEMATT 3300", and "ACEMATT TS100", and the like.

Examples of the precipitated silica include, but are not limited to, trade names of "ACEMATT 3600", "ACEMATT OK607(LC)", "ACEMATT OK390", "ACEMATT OK900", "ACEMATT OK520", "ACEMATT OK500", "ACEMATT OK412", "ACEMATT HK390", "ACEMATT 790", "ACEMATT 82", "ACEMATT HK520", "ACEMATT HK400", "ACEMATT 810", "ACEMATT HK125", and "ACEMATT HK440" manufactured by Evonik Japan Co., Ltd., and the like.

The matting agent may be surface-treated or untreated. Among these, the use of fumed silica is particularly preferable.

The matting agent is generally blended in an amount of 3 mass% or more and 20 mass% or less with respect to the total mass of the polyaspartic coating composition of the present embodiment.

The polyaspartic coating composition of the present embodiment may further contain a dispersant. As the dispersant, commercially available products may be used, and examples thereof include those manufactured by BYK Corporation under the trade names "DESPERBYK103", "DESPERBYK-145", "DESPERBYK-2155", and "DESPERBYK-2159", and the like. These may be used alone or in combination of two or more.

The polyaspartic coating composition of this embodiment generally contains 0.1 mass% or more and 15 mass% or less, and preferably 0.3 mass% or more and 8 mass% or less, of a dispersant with respect to the total mass of the composition.

The polyaspartic coating composition of the present embodiment may further contain, as other components, pigments such as a titanium oxide, a carbon black, an indigo, a quinacridone, a pearl mica, or the like; metal powder pigments such as an aluminum, or the like; rheology control agents such as a hydroxyethyl cellulose, a urea compound, a microgels, or the like; surface conditioners; curing accelerators such as a tin compound, a zinc compound, an amine compound, or the like; and the like.

<Method of producing polyaspartic coating composition>

The polyaspartic coating composition of the present embodiment is obtained by mixing the above-mentioned aspartic acid ester compound with other components as necessary to obtain a mixture, and then blending the above-mentioned polyisocyanate composition, which is a curing agent component, into the mixture and mixing using a known method. At this time, a solvent may or may not be used. The polyaspartic coating composition of the present embodiment has a lower viscosity than conventional ones, so it can be produced while maintaining workability even in a high solids formulation.

<Applications>

The polyaspartic coating composition of the present embodiment is suitably used as a primer, intermediate coat or top coat on metals such as steel plates, surface-treated steel plates or the like, plastics, inorganic materials such as ceramics or the like, glass, and concrete by roll coating, curtain flow coating, spray coating, electrostatic coating, bell coating, immersion, roller coating, brush coating, or the like.

The polyaspartic coating composition of the present embodiment is suitable for use in imparting good appearance, weather resistance, acid resistance, rust resistance, chipping resistance, adhesion, etc. to pre-coated metals including rust-resistant steel plates, painting parts of automobiles, painting parts of plastics, or the like.

The polyaspartic coating composition of the present embodiment is also useful as an adhesive, a pressure sensitive adhesive, an elastomer, a foam, a surface treatment agent, and the like.

In addition, the coating film formed by the polyaspartic coating composition of the present embodiment is flexible, has an increased crosslinking density, and is particularly excellent in weather resistance. Therefore, the polyaspartic coating composition of the present embodiment is suitable for use in heavy-duty anticorrosion coating of structures that require long-term weather resistance, such as bridges, highways, transmission towers, and wind power generation facilities (towers, blades, etc.), which are exposed to harsh environments such as wind, rain, snow, and temperature changes.

<<Coating film>>

The coating film of the present embodiment is formed by curing the above-mentioned polyaspartic coating composition.

The coating film of the present embodiment is excellent in weather resistance and elongation at a low

temperature of about -20°C.

The coating film of the present embodiment is obtained by applying the above-mentioned polyaspartic coating composition using a known method such as roll coating, curtain flow coating, spray coating, bell coating, electrostatic coating, or the like, and then drying or baking at room temperature to harden it.

## Examples

The present embodiment will be described in more detail below with reference to the Examples, but the present embodiment is not limited to these Examples.

The methods for measuring various physical properties and the methods for evaluating various properties are described below. Unless otherwise specified, "parts" and "%" mean "parts by mass" and "mass%".

<Method of measuring physical properties>

[Physical Property 1]

(NCO content (mass%))

The NCO content (isocyanate content, mass%) of the polyisocyanate composition was measured as follows. After precisely weighing (Wg) 1 g or more and 3 g or less of the polyisocyanate composition prepared in the production example into an Erlenmeyer flask, 20 mL of toluene was added to completely dissolve the polyisocyanate composition. Then, 10 mL of a 2N toluene solution of di-n-butylamine was added, and after completely mixing, the mixture was left at room temperature for 15 minutes. Furthermore, 70 mL of isopropyl alcohol was added to this solution and completely mixed. This solution was titrated with a 1N hydrochloric acid solution (factor F) using an indicator to obtain a titration value $V_2$ mL. A similar titration operation was performed without using polyisocyanate to obtain a titration value $V_1$ mL. From the obtained titration values $V_2$ mL and $V_1$ mL, the NCO content (mass%) of the polyisocyanate was calculated based on the following formula.

$$(\text{NCO content (mass\%)}) = (V_1\text{-}V_2 \times F \times 42/(W \times 1{,}000) \times 100$$

[Physical Property 2]

(Molar ratio of each functional group)

The resulting polyisocyanate composition was subjected to $^{13}$C-NMR measurement using Biospin Avance 600 (trade name) manufactured by Bruker Corp.
The specific measurement conditions were as follows.

(Measurement conditions).

$^{13}$C-NMR apparatus: AVANCE 600 (manufactured by Bruker)

CryoProbe (manufactured by Bruker)
CryoProbe (registered trademark)
CPDUL
600S3-C/HD-05Z

Resonance frequency: 150 MHz
Concentration: 60 wt/vol%
Shift reference: $CDCl_3$ (77 ppm)
Accumulation count: 10,000 times
Pulse program: zgpg30 (proton complete decoupling method, waiting time: 2 sec)

The integral values of the following signals were divided by the number of carbons being measured to determine

the molar ratios of isocyanurate groups, uretdione groups, allophanate groups, and urethane groups. Next, B/A (molar ratio), C×100/(A+B+C+D) (mol%), and D×100/(A+B+C+D) (mol%) were calculated, where A is the molar number of urethane groups, B is the molar number of allophanate groups, C is the molar number of isocyanurate groups, and D is the molar number of uretdione groups.

Isocyanurate group: (integral value near 148.6 ppm) ÷ 3
Uretdione group: (integral value near 157.8 ppm) ÷ 2
Urethane group: (integral value near 156.5 ppm) ÷ 1
Allophanate group: (integral value near 154 ppm) ÷ 1

<Evaluation method>

[Evaluation 1]

(Viscosity of polyisocyanate composition (mPa·s))

The viscosity of the polyisocyanate composition was measured at 25°C using an E-type viscometer (trade name: RE-85R, manufactured by Toki Sangyo Co., Ltd.). A standard rotor (1°34' × R24) was used for the measurement. The rotation speed was set as follows:

(Rotation speed)

100 rpm (in the case where the viscosity is less than 128 mPa·s)
50 rpm (in the case where the viscosity is 128 mPa·s or more and less than 256 mPa·s)
20 rpm (in the case where the viscosity is 256 mPa·s or more and less than 640 mPa·s)
10 rpm (in the case where the viscosity is 640 mPa·s or more and less than 1,280 mPa·s)
5 rpm (in the case where the viscosity is 1,280 mPa·s or more and less than 2,560 mPa·s)
2.5 rpm (in the case where the viscosity is 2,560 mPa·s or more and less than 5,120 mPa·s)

(Evaluation criteria)

A: 1,500 mPa·s or less
B: More than 1,500 mPa·s but not more than 2,000 mPa·s
C: More than 2,000 mPa·s but not more than 3,000 mPa·s
D: More than 3,000 mPa·s

[Evaluation 2]

(Crystallization of polyisocyanate composition)

The turbidity of the polyisocyanate composition at room temperature (23°C) was measured as the transmittance (%) at 550 nm in UV measurement using a JASCO V-650. The measured transmittance was evaluated according to the following evaluation criteria.

(Evaluation criteria)

A: The transmittance at 550 nm was 90% or more.
B: The transmittance at 550 nm was 80% or more but less than 90%.
C: The transmittance at 550 nm was 70% or more but less than 80%.
D: The transmittance at 550 nm was less than 70%.

[Production of polyaspartic coating composition]

An aspartic acid ester compound "Feispartic F420" (manufactured by Feiyang Co. Ltd., amine value: 201 mg KOH/g resin) and each polyisocyanate composition were mixed so that the NCO/NH ratio was 1.1 (molar ratio) and the solid content of the coating material was adjusted to 80 mass% with n-butyl acetate to obtain a polyaspartic coating composition. In addition, for Example 1-17, the polyaspartic coating composition was produced by the method described below.

[Evaluation 3]

(Appearance of coating film)

The polyaspartic coating composition obtained by the above method was applied to a glass plate with an applicator so that the dry film thickness was 40 μm to 60 μm. After application, each coating film was cured for 7 days under conditions of 23°C and a humidity of 50 RH%. The appearance of each coating film was evaluated according to the following evaluation criteria.

(Evaluation criteria)

A: The surface was very smooth, and no unevenness was observed.
B: The surface was smooth, but small unevenness was slightly observed.
C: The surface had a lot of unevenness and wrinkles.

[Evaluation 4]

(Weather resistance of coating film)

The polyaspartic coating composition obtained by the above method was applied to a white board with an applicator so that the dry film thickness was 40 μm to 60 μm. After application, each coating film was cured for 7 days under conditions of 23°C and a humidity of 50 RH%. Then, the coating film was evaluated under the conditions of JIS K5600-7-8 using a Dew Panel Light Control Weather Meter FDP manufactured by Suga Test Instruments Co., Ltd. The weather resistance of each coating film was evaluated according to the following evaluation criteria.

(Evaluation criteria)

A: The gloss retention at 60 degrees after 2,500 hours of exposure was 90% or more.
B: The gloss retention at 60 degrees after 2,000 hours of exposure was 90% or more.
C: The gloss retention at 60 degrees after exposure for 1,500 hours was 80% or more and less than 90%.
D: The gloss retention at 60 degrees after 1,500 hours of exposure was less than 80%.

[Evaluation 5]

(Low-temperature elongation of coating film)

The polyaspartic coating composition obtained by the above method was applied to a polypropylene (PP) plate with an applicator so that the dry film thickness was 40 μm to 60 μm. After application, the coating was cured for 7 days under conditions of 23°C and a humidity of 50 RH% to obtain each coating film. The elongation of the coating film was measured at a temperature of -20°C using a tensile tester (RTE-1210, manufactured by ORIENTEC) and a thermostatic chamber (TLA-R3T-F-W, manufactured by ORIENTEC) at a tensile speed of 20 mm/min and a gripping distance of 20 mm. The low-temperature elongation of each coating film was evaluated according to the following evaluation criteria.

(Evaluation criteria)

A: The coating elongation was 300% or more.
B: The coating elongation was 200% or more and less than 300%.
C: The coating elongation was 150% or more and less than 200%.
D: The coating elongation was 0% or more and less than 150%.

<Production of polyisocyanate composition>

[Example 1-1]

(Production of polyisocyanate composition PA1-al)

The inside of a four-neck flask equipped with a stirrer, a thermometer, and a condenser was replaced with nitrogen, and 450 g of HDI, 74 g of polycaprolactone polyol Capa 2043 (manufactured by Ingevity; hereinafter, sometimes referred to as "PCL1"), and 74 g of polycaprolactone polyol Capa 2085 (manufactured by Ingevity; hereinafter, sometimes referred to as "PCL2") were charged and subjected to a urethane formation reaction for 2 hours while stirring at 100°C. After heating to 130°C, 0.11 g of a 2-ethyl-1-hexanol solution containing 20 mass% of 2-ethylhexanoate zirconyl was added as an allophanate catalyst. When the refractive index of the reaction solution increased to 0.00094, 1.0 g of a 2-ethyl-1-hexanol solution containing 10 mass% of pyrophosphoric acid in terms of solid content (manufactured by Taihei Chemical Industry Co., Ltd., trade name "Phosphoric acid (105%)", diluted with 2-ethyl-1-hexanol) was added to stop the reaction. After filtering the reaction solution, unreacted HDI was removed using a falling thin film distillation apparatus under the conditions of 150°C (0.2 Torr) for the 1st time, 150°C (0.2 Torr) for the 2nd time, and 160°C (0.2 Torr) for the 3rd time. The obtained polyisocyanate composition was a liquid, and had a viscosity of 1,630 mPa·s and an NCO content of 9.4 mass%. The molar ratio of allophanate group/urethane group was 10/90. The obtained polyisocyanate composition was designated PA1-a1.

[Example 1-2]

(Production of polyisocyanate composition PA1-a2)

The inside of a four-neck flask equipped with a stirrer, a thermometer, and a condenser was replaced with nitrogen, and 450 g of HDI, 74 g of PCL1, and 74 g of PCL2 were charged and subjected to a urethane formation reaction at 100°C for 2 hours while stirring. After heating to 140°C, an allophanate formation reaction was performed for 3 hours. After 3 hours, the temperature was lowered to room temperature to stop the reaction. After filtering the reaction solution, unreacted HDI was removed using a falling thin film distillation apparatus under the conditions of 150°C (0.2 Torr) for the 1st time, 150°C (0.2 Torr) for the 2nd time, and 160°C (0.2 Torr) for the 3rd time. The obtained polyisocyanate composition was liquid, and the molar ratio of allophanate group/urethane group was 10/90. The obtained polyisocyanate composition was represented by PA1-a2.

[Example 1-3]

(Production of polyisocyanate composition PA1-a3)

The polyisocyanate composition PA1-a3 was produced in the same manner as in Example 1-1, except that the types and amounts of the raw materials were as shown in the table below, and the reaction was stopped when the increase in the refractive index of the reaction solution reached 0.00032.

[Example 1-4]

(Production of polyisocyanate composition PA1-a4)

The polyisocyanate composition PA1-a4 was produced in the same manner as in Example 1-1, except that the types and amounts of the raw materials were as shown in the table below, and the reaction was stopped when the increase in the refractive index of the reaction solution reached 0.0028.

[Examples 1-6 to 1-13, Example 1-15, and Example 1-18]

(Production of polyisocyanate compositions PA1-a6 to PA1-a13, PA1-a15, and PA1-a17)

Each polyisocyanate composition was produced in the same manner as in Example 1-1, except that the types and amounts of the raw materials were as shown in the table below.

[Example 1-5]

(Production of polyisocyanate composition PA1-a5)

The inside of a four-neck flask equipped with a stirrer, a thermometer, a reflux condenser, a nitrogen inlet tube, and a dropping funnel was filled with nitrogen, and 100 parts by mass of HDI was charged, and the temperature inside the reactor was maintained at 60°C while stirring. 0.15 parts by mass of a solution obtained by diluting tetrabutylammonium acetate, as an isocyanurate-forming reaction catalyst, with 2-ethyl-1-hexanol to 10 mass% was added thereto, and an isocyanurate-forming reaction was carried out. When the NCO content of the reaction solution reached 43.8 mass%, phosphoric acid was added to stop the reaction. Thereafter, the reaction solution was maintained at 90°C for 1 hour. After filtering the cooled reaction solution, unreacted HDI was removed using a thin-film evaporator. An isocyanurate-type polyisocyanate having an NCO content of 23.1 mass% and a viscosity at 25°C of 1,350 mPa·s was obtained.

The obtained isocyanurate-type polyisocyanate was mixed with the polyisocyanate composition PA1-a1 obtained in Example 1-1 such that the ratio of the molar amount of isocyanurate groups to the total amount of isocyanurate groups, uretdione groups, allophanate groups, and urethane groups was 22 mol%, to obtain the polyisocyanate composition PA1-a5.

[Example 1-14]

(Production of polyisocyanate composition PA1-a14)

A light stabilizer (hindered amine compound, trade name "Tinuvin 765", manufactured by BASF Japan Ltd.) was added to the polyisocyanate composition PA1-a6 obtained in Example 1-6 so that the light stabilizer amounted to 1.0 mass% with respect to the total mass of the polyisocyanate composition, thereby obtaining the polyisocyanate composition PA1-a14.

[Example 1-16]

(Production of polyisocyanate composition PA1-a16)

The inside of a four-neck flask equipped with a stirrer, a thermometer, and a condenser was replaced with nitrogen, and 1,200 g of HDI and 93 g of 2-ethyl-1-hexanol were charged and subjected to a urethane formation reaction at 90°C for 1 hour while stirring. After raising the temperature to 130°C, 0.42 g of a mineral spirit solution containing 20 mass% of 2-ethylhexanoate zirconyl as an allophanate catalyst was added. After 60 minutes, when the increase in the refractive index of the reaction solution reached 0.0055, 3.9 g of a 2-ethyl-1-hexanol solution containing 10 mass % of pyrophosphoric acid in terms of solid content (manufactured by Taihei Chemical Industry, trade name "Phosphoric acid (105%)", diluted with 2-ethyl-1-hexanol) was added to stop the reaction. After filtering the reaction solution, unreacted HDI was removed using a falling thin film distillation apparatus under the conditions of 150°C (0.2 Torr) for the 1st time and 160°C (0.2 Torr) for the 2nd time. The obtained allophanate-type polyisocyanate compound was a transparent liquid, with a yield of 330 g, a viscosity of 100 mPa·s, and an NCO content of 17.4 mass%. The molar ratio of allophanate group/isocyanurate group was 97/3.

22 parts by mass of the obtained allophanate-type polyisocyanate was mixed with 78 parts by mass of the polyisocyanate composition PA1-a15 obtained in Example 1-15 to obtain the polyisocyanate composition PA1-a16.

[Comparative Example 1-1]

(Production of polyisocyanate composition PA1-b1)

A four-neck flask equipped with a stirrer, a thermometer, and a condenser was replaced with nitrogen, and 450 g of HDI, 74 g of PCL1, and 74 g of PCL2 were charged and subjected to a urethane formation reaction at 100°C for 2 hours while stirring. After filtering the reaction solution, unreacted HDI was removed using a falling thin film distillation apparatus under the conditions of 150°C (0.2 Torr) for the 1st time, 150°C (0.2 Torr) for the 2nd time, and 160°C (0.2 Torr) for the 3rd time. The obtained polyisocyanate composition was a liquid, and had a viscosity of 1,560 mPa·s and an NCO content of 9.1

mass%. The obtained polyisocyanate composition was represented by PA1-b1.

[Comparative Example 1-2]

(Production of polyisocyanate composition PA1-b2)

The polyisocyanate composition PA1-b2 was produced in the same manner as in Example 1-1, except that the types and amounts of the raw materials were as shown in the table below, and the reaction was stopped when the increase in the refractive index of the reaction solution reached 0.0046.

<Production of coating composition>

[Example 1-17]

In the method for producing a polyaspartic coating composition described above, molecular sieves (MS) (manufactured by Union Showa Co., Ltd., trade name "3A Powder"; hereinafter, sometimes referred to as "3A-MS") were added to the polyisocyanate composition PA1-a15 obtained in Example 1-15 in an amount of 1.7 mass % relative to the total mass of the polyaspartic coating composition, to obtain the coating composition.

The various physical properties and evaluation results are shown in the following table. The abbreviations in the table represent the following compounds.

(Polyol)

·Polyester polyol

PCL1: Polycaprolactone polyol "Capa 2043", manufactured by Ingevity, number average molecular weight Mn: 400, average number of hydroxyl groups: 2, viscosity at 25°C: 246 mPa·s

PCL2: Polycaprolactone polyol "Capa 2085", manufactured by Ingevity, number average molecular weight Mn: 830, average number of hydroxyl groups: 2, viscosity at 25°C: 627 mPa·s

PCL3: Polycaprolactone polyol "ODX2542C", manufactured by DIC Corporation, number average molecular weight Mn: 850, average number of hydroxyl groups: 3, viscosity at 25°C: 1,270 mPa·s

PCL4: Polycaprolactone polyol "Capa 2054", manufactured by Ingevity, number average molecular weight Mn: 550, average number of hydroxyl groups: 2, viscosity at 25°C: 360 mPa·s

PCL5: Polycaprolactone polyol "Capa 2067A", manufactured by Ingevity, number average molecular weight Mn: 650, average number of hydroxyl groups: 2, viscosity at 25°C: 493 mPa·s

PES: polyester polyol "Kuraray Polyol P-510", manufactured by Kuraray Co., Ltd., number average molecular weight Mn: 500, average number of hydroxyl groups: 2, viscosity at 25°C: 540 mPa·s

·Polyoxyalkylene polyol

PPG1: "ECOTRION H1000", manufactured by SK chemicals, number average molecular weight Mn: 1,000, average number of hydroxyl groups: 2, viscosity at 25°C: 489 mPa·s

PPG2: "ECOTRION H2000", manufactured by SK chemicals, number average molecular weight Mn: 2,000, average number of hydroxyl groups: 2, viscosity at 25°C: 1,701 mPa·s

PPG3: "Velvet H250", manufactured by Allessa, number average molecular weight Mn: 227, average number of hydroxyl groups: 2, viscosity at 25°C: 107 mPa·s

PTMG: "BioPTMG650", manufactured by Mitsubishi Chemical Corporation, number average molecular weight Mn: 655, average number of hydroxyl groups: 2, viscosity at 25°C: 351 mPa·s

[Table 1-1]

| | | | Ex. 1-1 | Ex. 1-2 | Ex. 1-3 | Ex. 1-4 | Ex. 1-5 | Ex. 1-6 | Ex. 1-7 |
|---|---|---|---|---|---|---|---|---|---|
| Composition | Polyisocyanate composition | | PA1-a1 | PA1-a2 | PA1-a3 | PA1-a4 | PA1-a5 | PA1-a6 | PA1-a7 |
| | Diisocyanate | | HDI | HDI | HDI | HDI | HDI | HDI | HDI |
| | Polyol | Type | PCL1 | PCL1 | PCL1 | PCL1 | PCL1 | PCL1 | PCL1 |
| | | Blending amount (mass%) | 50 | 50 | 50 | 50 | 50 | 50 | 72 |
| | | Type | PCL2 | PCL2 | PCL2 | PCL2 | PCL2 | PPG1 | PPG1 |
| | | Blending amount (mass%) | 50 | 50 | 50 | 50 | 50 | 50 | 28 |
| | Allophanate-type PI (mass%) | | - | - | - | - | - | - | - |
| | Light absorbing agent HALS (mass%) | | - | - | - | - | - | - | - |
| Physical property | B/A(Molar ratio) | | 10/90 | 10/90 | 3/97 | 30/70 | 10/90 | 10/90 | 10/90 |
| | D×100/(A+B+C+D) (mol%) | | 2 | 10 | 1 | 3 | 2 | 2 | 2 |
| | C×100/(A+B+C+D) (mol%) | | 0.10 | 2.00 | 0.03 | 0.20 | 22.00 | 0.10 | 0.10 |
| | NCO content (mass%) | | 9.4 | 9.6 | 9.2 | 10.4 | 12.4 | 9.3 | 9.6 |
| Coating composition | MS | 3A-MS (mass%) | - | - | - | - | - | - | - |
| Evaluation | Viscosity | (mPa·s) | 1630 | 1480 | 1580 | 1930 | 1700 | 1220 | 1340 |
| | | - | B | A | B | B | B | A | A |
| | Crystallinity | T550nm (%) | 82 | 85 | 75 | 97 | 92 | 85 | 82 |
| | | - | B | B | C | A | A | B | B |
| | Appearance | | A | A | B | B | B | A | A |
| | Weather resistance | | A | A | A | C | A | C | B |
| | Low-temperature elongation | (%) | 350 | 210 | 440 | 200 | 160 | 540 | 420 |
| | | - | A | B | A | B | C | A | A |

[Table 1-2]

| | | | Ex. 1-8 | Ex. 1-9 | Ex. 1-10 | Ex. 1-11 | Ex. 1-12 | Ex. 1-13 | Ex. 1-14 |
|---|---|---|---|---|---|---|---|---|---|
| Composition | Polyisocyanate composition | | PA1-a8 | PA1-a9 | PA1-a10 | PA1-a11 | PA1-a12 | PA1-a13 | PA1-a14 |
| | Diisocyanate | | HDI | HDI | HDI | HDI | HDI | HDI | HDI |
| | Polyol | Type | PCL1 | PCL1 | PCL1 | PCL1 | PCL1 | PCL1 | PCL1 |
| | | Blending amount (mass%) | 50 | 72 | 50 | 50 | 50 | 50 | 50 |
| | | Type | PCL3 | PCL3 | PES | PTMG | PPG2 | PPG3 | PPG1 |
| | | Blending amount (mass%) | 50 | 28 | 50 | 50 | 50 | 50 | 50 |
| | Allophanate-type PI (mass%) | | - | - | - | - | - | - | - |
| | Light absorbing agent | HALS (mass%) | - | - | - | - | - | - | 1.0 |
| Physical property | B/A(Molar ratio) | | 10/90 | 10/90 | 10/90 | 10/90 | 10/90 | 10/90 | 10/90 |
| | D×100/(A+B+C+D) (mol%) | | 2 | 2 | 2 | 2 | 2 | 2 | 2 |
| | C×100/(A+B+C+D) (mol%) | | 0.10 | 0.10 | 0.10 | 0.10 | 0.10 | 0.10 | 0.10 |
| | NCO content (mass%) | | 9.0 | 9.9 | 11.2 | 9.5 | 8.2 | 13.4 | 9.3 |
| Coating composition | MS | 3A-MS (mass%) | - | - | - | - | - | - | - |
| Evaluation | Viscosity | (mPa·s) | 2600 | 2200 | 1510 | | 1950 | 1020 | 1220 |
| | | - | C | C | B | 1350 A | B | A | A |
| | Crystallinity | T550nm (%) | 98 | 96 | 98 | 80 | 80 | 79 | 82 |
| | | - | A | A | A | B | B | C | B |
| | Appearance | | B | B | A | B | B | A | A |
| | Weather resistance | | A | A | A | C | C | C | B |
| | Low-temperature elongation | (%) | 180 | 220 | 230 | 230 | 560 | 205 | 540 |
| | | - | C | B | B | B | A | B | A |

[Table 1-3]

| | | | Ex. 1-15 | Ex. 1-16 | Ex. 1-17 | Ex.1-18 | Com. Ex. 1-1 | Com. Ex. 1-2 |
|---|---|---|---|---|---|---|---|---|
| Composition | Polyisocyanate composition | | PA1-a15 | PA1-a16 | PA1-a15 | PA1-a17 | PA1-b1 | PA1-b2 |
| | Diisocyanate | | HDI | HDI | HDI | HDI | HDI | HDI |
| | Polyol | Type | PCL1 | PCL1 | PCL1 | PCL5 | PCL1 | PCL1 |
| | | Blending amount (mass%) | 50 | 50 | 50 | 100 | 50 | 50 |
| | | Type | PCL4 | PCL4 | PCL4 | - | PCL2 | PCL2 |
| | | Blending amount (mass%) | 50 | 50 | 50 | - | 50 | 50 |
| | Allophanate-type PI (mass%) | | - | 22 | - | - | - | - |
| | Light absorbing agent HALS (mass%) | | - | - | - | - | - | - |
| Physical property | B/A(Molar ratio) | | 10/90 | 29/71 | 10/90 | 10/90 | 0/100 | 50/50 |
| | D×100/(A+B+C+D) (mol%) | | 2 | 2 | 2 | 2 | 0 | 5 |
| | C×100/(A+B+C+D) (mol%) | | 0.10 | 1.50 | 0.10 | 0.10 | 0.00 | 0.40 |
| | NCO content (mass%) | | 10.8 | 12.1 | 10.8 | 8.7 | 9.1 | 11.8 |
| Coating composition | MS | 3A-MS (mass%) | - | - | 1.7 | - | - | - |
| Evaluation | Viscosity | (mPa·s) | 1360 | 820 | 1360 | 1510 | 1560 | 3100 |
| | | - | A | A | A | B | B | D |
| | Crystallinity | T550nm (%) | 84 | 95 | 84 | 79 | 10 | 95 |
| | | - | B | A | B | C | D | A |
| | Appearance | | A | A | A | A | C | C |
| | Weather resistance | | A | B | A | C | A | D |
| | Low-temperature elongation | (%) | 280 | 230 | 270 | 350 | 550 | 130 |
| | | - | B | B | B | A | A | D |

As shown in the above table, the polyisocyanate compositions PA1-a1 to PA1-a17 (Examples 1-1 to 1-16, 1-18) that satisfy all of the above-mentioned configurations have a low viscosity of 3,000 mPa·s or less, are easily mixed with aspartic acid ester compounds even in high solid formulations, and have almost no turbidity in terms of crystallinity. From this, it was presumed that when these polyisocyanate compositions are used as curing agents for polyaspartic coating compositions, they can be mixed uniformly, and the curability and smoothness of the coating film will be good. Furthermore, the appearance, weather resistance, and low-temperature elongation of the coating film obtained using the polyaspartic coating compositions containing these polyisocyanate compositions were also good.

In addition, in a comparison between the polyisocyanate compositions PA1-a1 and PA1-a2 (Examples 1-1 and 1-2) having different molar ratios of uretdione groups, it was found that the lower the molar ratio of uretdione groups, the better the low-temperature elongation of the coating film, whereas the higher the molar ratio of uretdione groups, the lower the viscosity of the polyisocyanate composition, which is more favorable.

In addition, in a comparison of the polyisocyanate compositions PA1-a1, PA1-a3, PA1-a4 (Examples 1-1, 1-3,

and 1-4), PA1-a14, and PA1-a16 (Examples 1-14 and 1-16) having different molar ratios B/A of allophanate groups to urethane groups, it was found that the higher the molar ratio B/A, the higher the transparency of the polyisocyanate composition and the more suppressed crystallization tended to be. On the other hand, the lower the molar ratio B/A, the more excellent the weather resistance and low-temperature elongation of the coating film tended to be.

In addition, in a comparison of the polyisocyanate compositions PA1-a1 and PA1-a5 (Examples 1-1 and 1-5) having different molar ratios of isocyanurate groups, the lower the molar ratio of isocyanurate groups, the more excellent the low-temperature elongation when formed into a coating film was observed.

In addition, in a comparison of the polyisocyanate compositions PA1-a1, PA1-a6, PA1-a8, PA1-a10 to PA1-a13, and PA1-a15 (Example 1-1, Example 1-6, Example 1-8, Example 1-10 to Example 1-13, and Example 1-15) in which different types of polyols were combined, a tendency was observed in which the weather resistance of the coating film was superior by combining two types of polyester polyols. A tendency was observed in which the viscosity was lower and the low-temperature elongation of the coating film was superior by combining two types of polyester polyols each having an average number of hydroxyl groups of 2.

In addition, in comparison with the polyisocyanate composition PA1-a17 (Example 1-18) containing one type of polyol, a tendency was observed in which crystallization could be further suppressed by combining two types of polyester polyols.

In addition, in a comparison of the polyisocyanate compositions PA1-a6 and PA1-a7 (Examples 1-6 and 1-7) in which the blending ratios of the combined polyester polyol and polyoxyalkylene polyol were different, the weather resistance of the coating film tended to improve as the blending ratio of the polyester polyol increased.

In addition, in a comparison of PA1-a8 and PA1-a9 (Examples 1-8 and 1-9), which have different blending ratios of polyester polyols having an average number of hydroxyl groups of 2 and polyester polyols having an average number of hydroxyl groups of 3, there was a tendency that the coating film had improved elongation when formed into a coating film as the blending ratio of polyester polyols having an average number of hydroxyl groups of 2 increased.

In addition, in a comparison of the polyisocyanate compositions PA1-a6 and PA1-a14 (Examples 1-6 and 1-14) which differ in the presence or absence of an ultraviolet absorber when formed into a polyaspartic coating composition, it was found that the inclusion of an ultraviolet absorber tended to result in an improved weather resistance when formed into a coating film.

On the other hand, the polyisocyanate composition PA1-b1 (Comparative Example 1-1) having no allophanate group was turbid and had poor crystallinity. In addition, the appearance of the coating film was also poor.

In addition, the polyisocyanate composition PA1-b2 (Comparative Example 1-2), in which the molar ratios of allophanate groups to urethane groups were 50/50 and exceeding 30/70, showed a high viscosity of 3,100 mPa·s, and it was difficult to prepare a polyaspartic coating composition by mixing it with an aspartic acid ester compound without using a solvent. In addition, the appearance, weather resistance, and low-temperature elongation of the coating film were also poor.

<Production of polyisocyanate composition>

[Example 2-1]

(Production of polyisocyanate composition PA2-a1)

The inside of a four-neck flask equipped with a stirrer, thermometer, and condenser was replaced with nitrogen, and 450 g of HDI, 67 g of polycaprolactone polyol Capa 2043 (manufactured by Ingevity; hereinafter sometimes referred to as "PCL1"), 67 g of polycaprolactone polyol Capa 2085 (manufactured by Ingevity; hereinafter sometimes referred to as "PCL2"), and 14 g of 2-ethyl-1,3-hexanediol were charged and subjected to a urethane reaction at 100°C for 2 hours while stirring. After heating to 130°C, 0.11 g of a 2-ethyl-1-hexanol solution containing 20 mass% of 2-ethylhexanoate zirconyl was added as an allophanate catalyst. When the increase in the refractive index of the reaction solution reached 0.001, 1.0 g of a 2-ethyl-1-hexanol solution containing 10 mass% of pyrophosphoric acid in terms of solid content (manufactured by Taihei Chemical Industry Co., Ltd., trade name "Phosphoric acid (105%)", diluted with 2-ethyl-1-hexanol) was added to stop the reaction. After filtering the reaction solution, unreacted HDI was removed using a falling thin film distillation apparatus under the conditions of 150°C (0.2 Torr) for the 1st time, 150°C (0.2 Torr) for the 2nd time, and 160°C (0.2 Torr) for the 3rd time. The obtained polyisocyanate composition was a liquid, and had a viscosity of 1,720 mPa·s and an NCO content of 10.5 mass%. The molar ratio of allophanate group/urethane group was 10/90. The obtained polyisocyanate composition was represented by PA2-a1

[Examples 2-2 to 2-3, 2-9 to 2-14, and 2-16]

(Production of polyisocyanate compositions PA2-a2 to PA2-a3, PA2-a9 to PA2-a14, and PA2-a16)

Each polyisocyanate composition was produced in the same manner as in Example 2-1, except that the types and amounts of the raw materials were as shown in the table below.

[Example 2-4]

(Production of polyisocyanate composition PA2-a4)

The inside of a four-neck flask equipped with a stirrer, thermometer, and condenser was replaced with nitrogen, and 450 g of HDI, 67 g of PCL1, 67 g of PCL2, and 14 g of 2-ethyl-1,3-hexanediol were charged and subjected to a urethane reaction at 100°C for 2 hours while stirring. After filtering the reaction solution, unreacted HDI was removed using a falling thin film distillation apparatus under the conditions of 150°C (0.2 Torr) for the 1st time, 150°C (0.2 Torr) for the 2nd time, and 160°C (0.2 Torr) for the 3rd time. The obtained polyisocyanate composition was a liquid having a viscosity of 1,590 mPa·s and an NCO content of 10.1 mass%. The obtained polyisocyanate composition was represented by PA2-a4.

[Example 2-5]

(Production of polyisocyanate composition PA2-a5)

The types and amounts of the raw materials were as shown in the table below, and the polyisocyanate composition PA2-a5 was produced in the same manner as in Example 2-1, except that the reaction was stopped when the increase in the refractive index of the reaction solution reached 0.00033

[Example 2-6]

(Production of polyisocyanate composition PA2-a6)

The types and amounts of the raw materials were as shown in the table below, and the polyisocyanate composition PA2-a6 was produced in the same manner as in Example 2-1, except that the reaction was stopped when the increase in the refractive index of the reaction solution reached 0.003.

[Example 2-7]

(Production of polyisocyanate composition PA2-a7)

The inside of a four-necked flask equipped with a stirrer, thermometer, and cooling tube was replaced with nitrogen, and 450 g of HDI, 67 g of PCL1, 67 g of PCL2, and 14 g of 2-ethyl-1,3-hexanediol were charged and subjected to a urethane formation reaction at 100°C for 2 hours while stirring. After heating to 140°C, an allophanate formation reaction was performed for 3 hours. After 3 hours, the temperature was lowered to room temperature to stop the reaction. After filtering the reaction solution, unreacted HDI was removed using a falling thin film distillation apparatus under the conditions of 150°C (0.2 Torr) for the 1st time, 150°C (0.2 Torr) for the 2nd time, and 160°C (0.2 Torr) for the 3rd time. The obtained polyisocyanate composition was liquid, and the molar ratio of allophanate group/urethane group was 10/90. The obtained polyisocyanate composition was represented by PA2-a7.

[Example 2-8]

(Production of polyisocyanate composition PA2-a8)

The inside of a four-neck flask equipped with a stirrer, a thermometer, a reflux condenser, a nitrogen inlet tube, and a dropping funnel was filled with nitrogen and 100 parts by mass of HDI was charged, and the temperature inside the reactor was maintained at 60°C while stirring. 0.15 parts by mass of a solution obtained by diluting tetrabutylammonium acetate, as an isocyanurate-forming reaction catalyst, with 2-ethyl-1-hexanol to 10 mass% was added thereto, and an isocyanurate-forming reaction was carried out. When the NCO content of the reaction solution reached 43.8 mass%, phosphoric acid was added to stop the reaction. Thereafter, the reaction solution was maintained at 90°C for 1 hour. After filtering the cooled reaction solution, unreacted HDI was removed using a thin-film evaporator. An isocyanurate-type polyisocyanate having an NCO content of 23.1 mass% and a viscosity at 25°C of 1,350 mPa·s was obtained.

The obtained isocyanurate-type polyisocyanate was mixed with the polyisocyanate composition PA2-a1

obtained in Example 2-1 so that the ratio of the molar amount of isocyanurate groups to the total amount of isocyanurate groups, uretdione groups, allophanate groups, and urethane groups was 22 mol%, to obtain the polyisocyanate composition PA2-a8.

[Example 2-15]

(Production of polyisocyanate composition PA2-a15)

A light stabilizer (hindered amine compound, trade name "Tinuvin 765" manufactured by BASF Japan Ltd.) was added to the polyisocyanate composition PA2-a9 obtained in Example 2-9 in an amount of 1.0 mass% with respect to the total mass of the polyisocyanate composition to obtain the polyisocyanate composition PA2-a15.

[Example 2-17]

(Production of polyisocyanate composition PA2-a17)

The inside of a four-neck flask equipped with a stirrer, a thermometer, and a condenser was replaced with nitrogen, and 1,200 g of HDI and 93 g of 2-ethyl-1-hexanol were charged and subjected to a urethane formation reaction at 90°C for 1 hour while stirring. After raising the temperature to 130°C, 0.42 g of a mineral spirit solution containing 20 mass% of 2-ethylhexanoate zirconyl as an allophanate catalyst was added. After 60 minutes, when the increase in the refractive index of the reaction solution reached 0.0055, 3.9 g of a 2-ethyl-1-hexanol solution containing 10 mass % of pyrophosphoric acid in terms of solid content (manufactured by Taihei Chemical Industry, trade name "Phosphoric acid (105%)", diluted with 2-ethyl-1-hexanol) was added to stop the reaction. After filtering the reaction solution, unreacted HDI was removed using a falling thin film distillation apparatus under the conditions of 150°C (0.2 Torr) for the 1st time and 160°C (0.2 Torr) for the 2nd time. The obtained allophanate-type polyisocyanate compound was a transparent liquid, having a yield of 330 g, a viscosity of 100 mPa·s, and an NCO content of 17.4 mass%. The molar ratio of allophanate group/-isocyanurate group was 97/3.

21 parts by mass of the obtained allophanate type polyisocyanate was mixed with 79 parts by mass of the polyisocyanate composition PA2-a16 obtained in Example 2-16 to obtain a polyisocyanate composition PA2-a17.

[Comparative Example 2-1]

(Production of polyisocyanate composition PA2-b1)

The inside of a four-neck flask equipped with a stirrer, a thermometer, and a condenser was replaced with nitrogen, and 450 g of HDI, 74 g of PCL1 and 74 g of PCL2 were charged and subjected to a urethane formation reaction at 100°C for 2 hours while stirring. After filtering the reaction solution, unreacted HDI was removed using a falling thin film distillation apparatus under the conditions of 150°C (0.2 Torr) for the 1st time, 150°C (0.2 Torr) for the 2nd time, and 160°C (0.2 Torr) for the 3rd time. The obtained polyisocyanate composition was a liquid having a viscosity of 1,560 mPa·s and an NCO content of 9.1 mass%. The obtained polyisocyanate composition was designated PA2-b1.

<Production of coating composition>

[Example 2-18]

In the method for producing a polyaspartic coating composition described above, molecular sieves (MS) (manufactured by Union Showa Co., Ltd., trade name "3A Powder"; hereinafter, sometimes referred to as "3A-MS") were added to the polyisocyanate composition PA2-a16 obtained in Example 2-16 in an amount of 1.7 mass % with respect to the total mass of the polyaspartic coating composition, to obtain a coating composition.

The various physical properties and evaluation results are shown in the following table. The abbreviations in the table represent the following compounds.

(First polyol)

·Polyester polyol

PCL1: Polycaprolactone polyol "Capa 2043", manufactured by Ingevity, number average molecular weight Mn: 400, average number of hydroxyl groups: 2, viscosity at 25°C: 246 mPa·s

PCL2: Polycaprolactone polyol "Capa 2085", manufactured by Ingevity, number average molecular weight Mn: 830, average number of hydroxyl groups: 2, viscosity at 25°C: 627 mPa·s

PCL3: Polycaprolactone polyol "ODX2542C", manufactured by DIC Corporation, number average molecular weight Mn: 850, average number of hydroxyl groups: 3, viscosity at 25°C: 1,270 mPa·s

PCL4: Polycaprolactone polyol "Capa 2054", manufactured by Ingevity, number average molecular weight Mn: 550, average number of hydroxyl groups: 2, viscosity at 25°C: 360 mPa·s

PES: polyester polyol "Kuraray Polyol P-510", manufactured by Kuraray Co., Ltd., number average molecular weight Mn: 500, average number of hydroxyl groups: 2, viscosity at 25°C: 540 mPa·s

·Polyoxyalkylene polyol

PPG1: "ECOTRION H1000", manufactured by SK chemicals, number average molecular weight Mn: 1,000, average number of hydroxyl groups: 2, viscosity at 25°C: 489 mPa·s

PTMG: "BioPTMG650", manufactured by Mitsubishi Chemical Corporation, number average molecular weight Mn: 655, average number of hydroxyl groups: 2, viscosity at 25°C: 351 mPa·s

(Second Polyol)

Diol 1: 2-ethyl-1,3-hexanediol
Diol 2: 2,4-diethyl-1,5-pentanediol

[Table 2-1]

| | | | Ex. 2-1 | Ex. 2-2 | Ex. 2-3 | Ex. 2-4 | Ex. 2-5 | Ex. 2-6 | Ex. 2-7 | Ex. 2-8 |
|---|---|---|---|---|---|---|---|---|---|---|
| Composition | Polyisocyanate composition | | PA2-a1 | PA2-a2 | PA2-a3 | PA2-a4 | PA2-a5 | PA2-a6 | PA2-a7 | PA2-a8 |
| | | | HDI | HDI | HDI | HDI | HDI | HDI | HDI | HDI |
| | Diisocyanate First polyol | Type | PCL1 | PCL1 | PCLI | PCL1 | PCL1 | PCL1 | PCL1 | PCL1 |
| | | Blending amount | 45 | 45 | 34 | 45 | 45 | 45 | 45 | 45 |
| | | (mass%) Type | PCL2 | PCL2 | PCL2 | PCL2 | PCL2 | PCL2 | PCL2 | PCL2 |
| | | Blending amount (mass%) | 45 | 45 | 34 | 45 | 45 | 45 | 45 | 45 |
| | Second polyol | Type | Dio1 | Diol 2 | Diol 1 | Diol 1 | Diol 1 | Diol 1 | Diol 1 | Diol 1 |
| | | Blending amount (mass%) | 10 | 10 | 32 | 10 | 10 | 10 | 10 | 10 |
| | Allophanate-type PI (mass%) | | - | - | - | - | - | - | - | - |
| | Light absorbing agent | HALS (mass%) | - | - | - | - | - | - | - | - |
| Physical property | B/A(Molar ratio) | | 10/90 | 10/90 | 10/90 | 0/100 | 3/97 | 30/70 | 10/90 | 10/90 |
| | D×100/(A+B+C+D) (mol%) | | 2 | 2 | 2 | 0 | 1 | 3 | 10 | 2 |
| | C×100/(A+B+C+D) (mol%) | | 0.10 | 0.10 | 0.10 | 0.00 | 0.03 | 0.20 | 2.00 | 22.00 |
| | NCO content (mass%) | | 10.5 | 10.4 | 12.9 | 10.1 | 10.3 | 11.4 | 10.7 | 13.5 |
| Coating composition | MS | 3A-MS (mass%) | - | - | - | - | - | - | - | - |
| Evaluation | Viscosity | (mPa·s) | 1720 | 1670 | 2110 | 1590 | 1630 | 1990 | 1590 | 1830 |
| | | - | B | B | C | B | B | B | B | B |
| | Crystallinity | T550nm (%) | 95 | 96 | 98 | 80 | 89 | 99 | 97 | 98 |
| | | - | A | A | A | B | B | A | A | A |
| | Appearance | | A | A | A | A | A | A | A | A |
| | Weather resistance | | A | A | A | A | A | C | A | A |
| | Low-temperature elongation | (%) | 420 | 405 | 280 | 610 | 510 | 260 | 280 | 190 |
| | | - | A | A | B | A | A | B | B | C |

[Table 2-2]

| | | | Ex. 2-9 | Ex. 2-10 | Ex. 2-11 | Ex. 2-12 | Ex. 2-13 | Ex. 2-14 | Ex. 2-15 |
|---|---|---|---|---|---|---|---|---|---|
| Composition | Polyisocyanate composition | | PA2-a9 | PA2-a10 | PA2-a11 | PA2-a12 | PA2-al3 | PA2-a14 | PA2-a15 |
| | Diisocyanate | | HDI | HDI | HDI | HDI | HDI | HDI | HDI |
| | First polyol | Type | PCL1 | PCL1 | PCL1 | PCL1 | PCL1 | PCL1 | PCL1 |
| | | Blending amount (mass%) | 45 | 62 | 45 | 62 | 45 | 45 | 45 |
| | | Type | PPG1 | PPG1 | PCL3 | PCL3 | PES | PTMG | PPG1 |
| | | Blending amount (mass%) | 45 | 28 | 45 | 28 | 45 | 45 | 45 |
| | Second polyol | Type | Diol 1 | Diol 1 | Diol 1 | Diol 1 | Diol 1 | Diol 1 | Diol 1 |
| | | Blending amount (mass%) | 10 | 10 | 10 | 10 | 10 | 10 | 10 |
| | Allophanate-type PI (mass%) | | - | - | - | - | - | - | - |
| | Light absorbing agent | HALS (mass%) | - | - | - | - | - | - | 1.0 |
| Physical property | B/A(Molar ratio) | | 10/90 | 10/90 | 10/90 | 10/90 | 10/90 | 10/90 | 10/90 |
| | D×100/(A+B+C+D) (mol%) | | 2 | 2 | 2 | 2 | 2 | 2 | 2 |
| | C×100/(A+B+C+D) (mol%) | | 0.10 | 0.10 | 0.10 | 0.10 | 0.10 | 0.10 | 0.10 |
| | NCO content (mass%) | | 10.3 | 10.7 | 10.2 | 11.2 | 12.5 | 10.7 | 10.3 |
| Coating composition | MS | 3A-MS (mass%) | - | - | - | - | - | - | - |
| Evaluation | Viscosity | (mPa·s) | 1320 | 1480 | 2730 | 2350 | 1650 | 1490 | 1320 |
| | | - | A | A | C | C | B | A | A |
| | Crystallinity | T550nm (%) | 91 | 89 | 99 | 98 | 99 | 88 | 91 |
| | | - | A | B | A | A | A | B | A |
| | Appearance | | A | A | B | B | A | A | A |
| | Weather resistance | | C | B | A | A | A | C | B |
| | Low-temperature elongation | (%) | 540 | 480 | 220 | 280 | 310 | 290 | 540 |
| | | - | A | A | B | B | A | B | A |

[Table 2-3]

| | | Ex. 2-16 | Ex. 2-17 | Ex. 2-18 | Com. Ex. 2-1 |
|---|---|---|---|---|---|
| | Polyisocyanate composition | PA2-a16 | PA2-a17 | PA2-a16 | PA2-b1 |
| | Diisocyanate | HDI | HDI | HDI | HDI |

(continued)

| | | | Ex. 2-16 | Ex. 2-17 | Ex. 2-18 | Com. Ex. 2-1 |
|---|---|---|---|---|---|---|
| Composition | First polyol | Type | PCL1 | PCL1 | PCL1 | PCL1 |
| | | Blending amount (mass%) | 45 | 45 | 45 | 50 |
| | | Type | PCL4 | PCL4 | PCL4 | PCL2 |
| | | Blending amount (mass%) | 45 | 45 | 45 | 50 |
| | Second polyol | Type | Diol 1 | Diol 1 | Diol 1 | - |
| | | Blending amount (mass%) | 10 | 10 | 10 | 0 |
| | Allophanate-type PI (mass%) | | - | 21 | - | - |
| | Light absorbing agent | HALS (mass%) | - | - | - | - |
| Physical property | B/A(Molar ratio) | | 10/90 | 29/71 | 10/90 | 0/100 |
| | D×100/(A+B+C+D) (mol%) | | 2 | 2 | 2 | 0 |
| | C×100/(A+B+C+D) (mol%) | | 0.10 | 1.50 | 1.00 | 0.00 |
| | NCO content (mass%) | | 11.9 | 13.0 | 11.9 | 9.1 |
| Coating composition | MS | 3A-MS (mass%) | - | - | 1.7 | - |
| Evaluation | Viscosity | (mPa·s) | 1450 | 860 | 1450 | 1560 |
| | | - | A | A | A | B |
| | Crystallinity | T550nm (%) | 95 | 98 | 95 | 10 |
| | | - | A | A | A | D |
| | Appearance | | A | A | A | C |
| | Weather resistance | | A | B | A | A |
| | Low-temperature elongation | (%) | 350 | 300 | 330 | 550 |
| | | - | A | A | A | A |

As shown in the above table, the polyisocyanate compositions PA2-a1 to PA2-a17 (Examples 2-1 to 2-17) that satisfy all of the above-mentioned configurations showed a low viscosity of 3,000 mPa·s or less, were easily mixed with aspartic acid ester compounds even in high solid formulations, and showed almost no turbidity in terms of crystallinity. From this, it was presumed that when these polyisocyanate compositions are used as curing agents for polyaspartic coating compositions, they can be mixed uniformly, and the curability and smoothness of the coating film will be good. Furthermore, the appearance, weather resistance, and low-temperature elongation of the coating film obtained using the polyaspartic coating compositions containing these polyisocyanate compositions were also good.

In addition, in a comparison of polyisocyanate compositions PA2-a1 and PA2-a3 (Examples 2-1 and 2-3) containing different amounts of the second polyol, the viscosity became lower and more favorable as the amount of the second polyol was reduced, and the low-temperature elongation when formed into a coating film tended to be more excellent.

In addition, in a comparison of the polyisocyanate compositions PA2-a1 and PA2-a4 to PA2-a6 (Example 2-1 and Example 2-4 to Example 2-6) having different molar ratios B/A of allophanate groups to urethane groups, it was found that the higher the molar ratio B/A, the higher the transparency of the polyisocyanate composition and the greater the tendency for crystallization to be suppressed. On the other hand, the lower the molar ratio B/A, the better the weather resistance and low-temperature elongation of the coating film.

In addition, in a comparison of polyisocyanate compositions PA2-a1 and PA2-a7 (Examples 2-1 and 2-7) with different molar ratios of uretdione groups, it was found that the lower the molar ratio of uretdione groups, the better the low-temperature elongation when formed into a coating film.

In addition, in a comparison of polyisocyanate compositions PA2-a1 and PA2-a8 (Examples 2-1 and 2-8) with different molar ratios of isocyanurate groups, it was found that the lower the molar ratio of isocyanurate groups, the better

the low-temperature elongation when formed into a coating film.

In addition, in a comparison of polyisocyanate compositions PA2-a1, PA2-a9, PA2-a11, PA2-a13 to PA2-a14, and PA2-a16 (Examples 2-1, 2-9, 2-11, 2-13 to 2-14, and 2-16) in which different types of polyols were combined, a tendency was observed in which the weather resistance of a coating film was superior by combining two types of polyester polyols. A tendency was observed in which the viscosity was lower and the low-temperature elongation of the coating film was superior by combining two types of polyester polyols each having an average number of hydroxyl groups of 2.

In addition, in a comparison of the polyisocyanate compositions PA2-a9 and PA2-a10 (Examples 2-9 and 2-10) in which the blending ratios of the combined polyester polyol and polyoxyalkylene polyol were different, the weather resistance of the coating film tended to improve as the blending ratio of the polyester polyol increased, while the crystallization was more likely to be suppressed as the blending ratio of the polyoxyalkylene polyol increased.

In addition, in a comparison of the polyisocyanate compositions PA2-a9 and PA2-a15 (Examples 2-9 and 2-15) which differ in the presence or absence of an ultraviolet absorber when formed into a polyaspartic coating composition, it was found that the inclusion of an ultraviolet absorber tended to result in an improved weather resistance when formed into a coating film.

On the other hand, the polyisocyanate composition PA2-b1 (Comparative Example 2-1) not containing the second polyol was turbid and had poor crystallinity. In addition, the appearance of the coating film was also poor.

INDUSTRIAL APPLICABILITY

The polyisocyanate composition of the present embodiment can provide a polyisocyanate composition that has good viscosity, can suppress crystallization, and has good appearance, weather resistance, and elongation at -20°C when formed into a coating film. The polyaspartic coating composition of the present embodiment contains the polyisocyanate composition, and has good appearance, weather resistance, and elongation at -20°C when formed into a coating film. The coating film of the present embodiment is formed by curing the polyaspartic coating composition, and has good appearance, weather resistance, and elongation at -20°C.

## Claims

1. A polyisocyanate composition comprising a polyisocyanate derived from

    at least one diisocyanate selected from the group consisting of an aliphatic diisocyanate and an alicyclic diisocyanate, and
    at least one polyol selected from the group consisting of a polyester polyol and a polyoxyalkylene polyol, wherein the polyol has a number average molecular weight of 200 or more and 2,000 or less and an average number of hydroxyl groups of 2 or 3,
    the polyisocyanate contains both a urethane group and an allophanate group within a single molecule, and
    a molar ratio of allophanate groups to urethane groups is 2/98 or more and 30/70 or less.

2. The polyisocyanate composition according to claim 1, wherein a molar ratio of uretdione groups to a total amount of isocyanurate groups, uretdione groups, allophanate groups, and urethane groups is 0.3 mol% or more and 20 mol% or less.

3. The polyisocyanate composition according to claim 1, wherein a molar ratio of isocyanurate groups to a total amount of isocyanurate groups, uretdione groups, allophanate groups, and urethane groups is 0.01 mol% or more and 20.00 mol% or less.

4. The polyisocyanate composition according to claim 1, wherein the polyol comprises two of the polyester polyols having structures different from each other, or comprises the polyester polyol and the polyoxyalkylene polyol.

5. The polyisocyanate composition according to claim 1, wherein a content of the polyoxyalkylene polyol is 30 mass% or less with respect to a total mass of the polyol.

6. The polyisocyanate composition according to claim 1, wherein a content of the polyol having an average number of hydroxyl groups of 3 is 30 mass% or less with respect to a total mass of the polyols.

7. The polyisocyanate composition according to claim 1, which is a curing agent for polyaspartic coating materials.

**8.** A polyaspartic coating composition comprising the polyisocyanate composition according to any one of claims 1 to 7 and an aspartic acid ester compound.

**9.** A coating film obtained by curing the polyaspartic coating composition according to claim 8.

**10.** A polyisocyanate composition comprising a polyisocyanate derived from a diisocyanate, a first polyol, and a second polyol, wherein

the diisocyanate is at least one selected from the group consisting of an aliphatic diisocyanate and an alicyclic diisocyanate,
the first polyol has a number average molecular weight of 200 or more and 2,000 or less, an average number of hydroxyl groups of 2 or 3, and is at least one selected from the group consisting of a polyester polyol and a polyoxyalkylene polyol,
the second polyol is a monoalcohol, diol, or triol having a branched chain and having 2 to 20 carbon atoms, and
a molar ratio of allophanate groups to urethane groups is 0/100 or more and 30/70 or less.

**11.** The polyisocyanate composition according to claim 10, wherein a content of the second polyol is 1 mass% or more and 30 mass% or less with respect to a total mass of the first polyol and the second polyol.

**12.** The polyisocyanate composition according to claim 10, wherein the second polyol is a diol having a branched chain and having 3 to 20 carbon atoms.

**13.** The polyisocyanate composition according to claim 10, wherein a molar ratio of allophanate groups to urethane groups is 2/98 to 30/70.

**14.** The polyisocyanate composition according to claim 10, wherein a molar ratio of uretdione groups to a total amount of isocyanurate groups, uretdione groups, allophanate groups, and urethane groups is 0.3 mol% or more and 20 mol% or less.

**15.** The polyisocyanate composition according to claim 10, wherein a molar ratio of isocyanurate groups to a total amount of isocyanurate groups, uretdione groups, allophanate groups, and urethane groups is 0.01 mol% or more and 20.00 mol% or less.

**16.** The polyisocyanate composition according to claim 10, wherein the first polyol comprises two of the polyester polyols having structures different from each other, or comprises the polyester polyol and the polyoxyalkylene polyol.

**17.** The polyisocyanate composition according to claim 10, wherein a content of the polyoxyalkylene polyol is 30 mass% or less with respect to a total mass of the first polyol and the second polyol.

**18.** The polyisocyanate composition according to claim 10, wherein a content of the polyol having an average number of hydroxyl groups of 3 is 30 mass% or less with respect to a total mass of the first polyol and the second polyol.

**19.** The polyisocyanate composition according to claim 10, which is a curing agent for polyaspartic coating materials.

**20.** A polyaspartic coating composition comprising the polyisocyanate composition according to any one of claims 10 to 19 and an aspartic acid ester compound.

**21.** A coating film obtained by curing the polyaspartic coating composition according to claim 20.

**INTERNATIONAL SEARCH REPORT**

International application No.
**PCT/JP2023/045906**

**A. CLASSIFICATION OF SUBJECT MATTER**

***C08G 18/10***(2006.01)i; ***C08G 18/12***(2006.01)i; ***C08G 18/32***(2006.01)i; ***C08G 18/40***(2006.01)i; ***C08G 18/42***(2006.01)i; ***C08G 18/65***(2006.01)i; ***C08G 18/73***(2006.01)i; ***C08G 18/75***(2006.01)i; ***C08G 18/78***(2006.01)i; ***C09D 175/00***(2006.01)i
FI: C08G18/10; C08G18/12; C08G18/32 025; C08G18/40 018; C08G18/42 002; C08G18/65 011; C08G18/73; C08G18/75; C08G18/78 037; C09D175/00

According to International Patent Classification (IPC) or to both national classification and IPC

**B. FIELDS SEARCHED**

Minimum documentation searched (classification system followed by classification symbols)

C08G18/10; C08G18/12; C08G18/32; C08G18/40; C08G18/42; C08G18/65; C08G18/73; C08G18/75; C08G18/78; C09D175/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2009-510238 A (BAYER MATERIALSCIENCE AG) 12 March 2009 (2009-03-12) claims 1-11, paragraphs [0009], [0017]-[0018], examples 1-4 | 1-21 |
| Y | WO 99/52960 A1 (ASAHI CHEMICAL INDUSTRY CO., LTD.) 21 October 1999 (1999-10-21) claim 1, examples 4-7 | 1-21 |
| Y | JP 04-050221 A (CHISSO CORPORATION) 19 February 1992 (1992-02-19) claims, p. 2, lower right column, lines 5-7, example 1 | 10-21 |
| Y | JP 2018-533646 A (BECTON, DICKINSON AND COMPANY) 15 November 2018 (2018-11-15) claims 1-22, example 1 | 10-21 |
| Y | JP 2000-336142 A (ASAHI GLASS COMPANY, LIMITED) 05 December 2000 (2000-12-05) claims 1-3, paragraph [0006], examples 1-2 | 10-21 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 January 2024** | **30 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/045906**

| Patent document cited in search report | Publication date (day/month/year) | Patent family member(s) | Publication date (day/month/year) |
|---|---|---|---|
| JP 2009-510238 A | 12 March 2009 | US 2007/0078255 A1<br>claims 1-11, paragraphs [0010], [0028]-[0029], examples 1-4<br>WO 2007/039133 A1<br>EP 1937742 A1<br>CN 101277988 A | |
| WO 99/52960 A1 | 21 October 1999 | US 6469122 B1<br>claim 1, examples 4-7<br>EP 1086969 A1<br>KR 10-2001-0041842 A<br>CN 1293682 A | |
| JP 04-050221 A | 19 February 1992 | (Family: none) | |
| JP 2018-533646 A | 15 November 2018 | US 2017/0107320 A1<br>claims 1-22, example 1<br>WO 2017/066381 A1<br>EP 3362493 A1<br>CN 108699206 A | |
| JP 2000-336142 A | 05 December 2000 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018163953 A